# EUROPEAN PATENT APPLICATION

(11) **EP 4 319 321 A1**
(43) Date of publication of application: **07.02.2024**
(21) Application number: 22794468.3
(22) Date of filing: 29.03.2022
(51) Int. Cl.: H04W 52/02, H04L 41/16

(54) **ENERGY-SAVING METHOD AND APPARATUS**

(30) Priority: 30.04.2021 CN 202110485078
(71) Applicant: Huawei Technologies Co., Ltd., Longgang Shenzhen, Guangdong 518129 (CN)
(72) Inventor: ZENG, Yu, Shenzhen, Guangdong 518129 (CN); GENG, Tingting, Shenzhen, Guangdong 518129 (CN); ZENG, Qinghai, Shenzhen, Guangdong 518129 (CN)
(74) Representative: Pfenning, Meinig & Partner mbB
(86) International application number: PCT/CN2022/083789
(87) International publication number: WO 2022/227995

(57) **Abstract**

An energy saving method and an apparatus are provided. The method includes: an AI device receives first data from a first network device and a second network device; the AI device performs an AI inference based on the first data to obtain an energy saving policy; and the AI device separately sends the energy saving policy to the first network device and the second network device. According to the method and the apparatus in embodiments of this application, accuracy and robustness of the energy saving policy can be improved, and in a scenario in which network traffic fluctuates, a quantity of times of frequently switching on or switching off a cell of the second network device can be reduced.

## Description

### CROSS-REFERENCE TO RELATED APPLICATIONS

This application claims priority to Chinese Patent Application No. 202110485078.7, filed with the China National Intellectual Property Administration on April 30, 2021 and entitled "ENERGY SAVING METHOD AND APPARATUS", which is incorporated herein by reference in its entirety.

### TECHNICAL FIELD

Embodiments of this application relate to the field of communication technologies, and in particular, to an energy saving method and an apparatus.

### BACKGROUND

Currently, a mobile network needs to meet different requirements, such as an ultra-high rate, an ultra-low latency, ultra-high reliability, and/or a massive quantity of connections, to support increasingly diversified services. As a result, network planning, network configuration, and resource scheduling are increasingly complex. Due to an increasingly high communication spectrum used by the mobile network, new technologies such as high-order multiple-input multiple-output (multiple-input multiple-output, MIMO), beamforming, and beam management are introduced, resulting in significantly increasing network energy consumption. Therefore, a higher requirement is imposed on network energy saving.

### SUMMARY

Embodiments of this application provide an energy saving method and an apparatus, to determine an energy saving policy based on artificial intelligence Al, so as to meet high requirements on network energy saving and meet new challenges of a wireless communication system.

According to a first aspect, an energy saving method is provided. The method is performed by an AI device, or may be performed by a component (a processor, a chip, or another component) configured in the AI device, or may be performed by a software module, or the like. The method includes: obtaining first data from a first network device and/or a second network device. For example, the AI device may obtain first data from the first network device and first data from the second network device. Alternatively, the second network device may obtain first data from the first network device, and the AI device may obtain, from the second network device, first data of the second network device and the first data of the first network device. Alternatively, the first network device may obtain first data from the second network device, and the AI device may obtain, from the first network device, first data of the first network device and the first data of the second network device. For content specifically included or indicated in the first data, refer to the following description. An energy saving policy is determined based on the first data; and the energy saving policy is output. The energy saving policy indicates at least one of the following: a scenario type tag of the second network device or a cell of the second network device; an energy saving operation performed by the second network device or the cell of the second network device; time information of the energy saving operation performed by the second network device or the cell of the second network device; a corresponding operation of the first network device performed during execution of the energy saving operation by the second network device or the cell of the second network device; time information of the corresponding operation performed by the first network device; or a condition that the second network device or the cell of the second network device needs to satisfy to execute the energy saving policy.

The energy saving operation performed by the cell of the second network device may also be described as the energy saving operation performed by the second network device in the cell.

Optionally, the energy saving policy indicates the corresponding operation of the first network device performed during execution of the energy saving operation by the second network device or the cell of the second network device, and the time information of the corresponding operation performed by the first network device. This may also be described as: The energy saving policy indicates an operation of the first network device and time information of the operation performed by the first network device. A time length corresponding to the time information may be greater than, equal to, or less than a time length for performing the energy saving operation by the second network device or the cell of the second network device. This is not limited. In this case, the first network device may not need to perceive the time information of the energy saving operation performed by the second network device or the cell of the second network device.

According to the foregoing design, an AI technology is combined with the energy saving policy to enable AI-based inference on the energy saving policy, to improve accuracy and robustness of the energy saving policy and prevent frequent switching when network traffic fluctuates.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

According to the foregoing design, the energy saving policy may indicate the scenario type tag of the second network device, for example, a capacity station. The tag may be essentially indication information, indicating that the capacity station is to put energy saving first, or to preferentially ensure a capacity, or the like, so that when executing the energy saving policy, the capacity station can perform determination automatically in a case of a sudden change in a network condition, thereby improving flexibility in executing the energy saving policy by the capacity station.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

According to the foregoing design, in addition to cell-level switch-off, switch-off of other levels, such as symbol-level switch-off, subframe-level switch-off, and port-level switch-off, is introduced to improve energy saving efficiency.

In a possible design, the corresponding operation of the first network device performed during execution of the energy saving operation by the second network device or the cell of the second network device includes: at least one of the following operations performed by the first network device during execution of the energy saving operation by the second network device or the cell of the second network device, where the at least one operation includes power adjustment or beam encryption. In an example, the AI device may directly indicate an operation that the first network device needs to perform in the at least one operation. For example, the at least one operation includes power adjustment beam encryption, and/or the like. If the AI device needs the first network device to perform power adjustment, the AI device may send power adjustment indication information to the first network device, and/or if the AI device needs the first network device to perform beam encryption, the AI device may send beam encryption indication information to the first network device. Alternatively, for each of the at least one operation, the AI device may indicate whether the first network device needs to perform the operation. For example, for each operation, a first value (for example, " 1") indicates that the AI device requires the first network device to perform the operation, and a second value (for example, "0") indicates that the AI device does not requires the first network device to perform the operation. For example, if the AI device requires the first network device to perform power adjustment without performing beam encryption, the indication information sent by the AI device to the first network device may be "10".

According to the foregoing design, in an example in which the second network device is a capacity station and the first network device is a coverage station, when the capacity station executes the energy saving policy, the coverage station performs corresponding adjustment, for example, increases a transmit power and performs beam encryption, to ensure coverage, thereby ensuring network coverage while achieving energy saving.

In a possible design, the determining an energy saving policy based on the first data includes: predicting at least one of network load, network coverage, or a network service type based on the first data; and determining the energy saving policy based on at least one of the predicted network load, the predicted network coverage, or the predicted network service type.

In a possible design, the method further includes: outputting at least one of the predicted network load, the predicted network coverage, or the predicted network service type.

According to the foregoing design, in addition to sending the energy saving policy to the coverage station and the capacity station, the AI device may further send the predicted network load, the predicted network coverage, the predicted network service type, or the like to the coverage station and the capacity station. During execution of the energy saving policy, the coverage station or the capacity station may periodically check whether a current network condition is consistent with the predicted network condition. If the current network condition is inconsistent with the predicted network condition, the coverage station or the capacity station may exit the execution of the energy saving policy in advance, and notify the AI device, to improve accuracy of the energy saving policy. For example, when executing the energy saving policy, the coverage station or the capacity station may determine whether a difference between a current network load and the predicted network load is greater than a threshold. When the difference is greater than the threshold, it indicates that the accuracy of the energy saving policy is low, and the execution of the energy saving policy may be exited. In this case, optionally, the coverage station or the capacity station may notify the AI device of the information, and the AI device may update the energy saving policy and deliver an updated energy saving policy to the coverage station and the capacity station.

In a possible design, the obtaining first data from a first network device and/or a second network device includes: outputting query information; and obtaining response information from the first network device and/or the second network device, where the response information is in response to the query information, and the response information indicates the first data.

In a possible design, the outputting query information includes: periodically outputting the query information; or
outputting the query information when a preset condition is satisfied.

In a possible design, the query information indicates at least one of the following: a service type predicted by the AI device supporting AI prediction, time information of the energy saving policy output by the AI device, information included in the energy saving policy, the first data that the first network device needs to provide, or the first data that the second network device needs to provide.

In a possible design, the method further includes: obtaining at least one of the following: service information of interest to the first network device and/or the second network device, time information of interest to the first network device and/or the second network device, or condition information of interest to the first network device and/or the second network device. For example, the AI device may obtain, through the first network device, related information of a service of interest to the first network device, and obtain, through the second network device, related information of a service of interest to the second network device. Alternatively, the AI device may obtain, through the first network device, related information of a service of interest to the first network device and related information of a service of interest to the second network device. Alternatively, the AI device may obtain, through the second network device, related information of a service of interest to the first network device, related information of a service of interest to the second network device, and the like.

According to the foregoing design, the coverage station or the capacity station may send to, the AI device, related information of a service of interest to the coverage station or the capacity station. The service of interest may refer to a service run by the coverage station or the capacity station in a specific time period, a service supported, or the like. The AI device may infer an energy saving policy for the service of interest. Then, when running the service of interest, the coverage station or the capacity station may use the corresponding energy saving policy. According to the foregoing method, for different types of services of interest to the coverage station or the capacity station, corresponding energy saving policies may be inferred, so that matched and precise energy saving policies may be provided for different types of interested services, thereby improving an energy saving effect.

In a possible design, the first data indicates at least one of the following: an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device. For example, if the first network device and the second network device respectively send the first data to the AI device, the first data sent by the first network device may indicate related information of the first network device, and the first data sent by the second network device may indicate related information of the second network device. Alternatively, if the first network device or the second network device sends the first data of the first network device and the first data of the second network device to the AI device, the first data may indicate related information of the first network device and related information of the second network device.

In a possible design, the method further includes: obtaining second data from the first network device and/or the second network device, where the second data indicates a network status of the first network device and/or the second network device during execution of the energy saving policy by the first network device and the second network device; updating the energy saving policy based on the second data; and outputting an updated energy saving policy.

According to the foregoing design, the AI device may further update the energy saving policy based on new data input by the coverage station and/or the capacity station, that is, the second data, to improve accuracy of the energy saving policy.

According to a second aspect, an energy saving method is provided. The method is performed by a first network device, or may be performed by a component (a processor, a chip, a circuit, or another component) configured in the first network device, or may be performed by a software module, or the like. The method includes:
outputting first data, where the first data is used to determine an energy saving policy; and obtaining the energy saving policy from an artificial intelligence AI device. The energy saving policy indicates at least one of the following: a scenario type tag of a second network device or a cell of the second network device; an energy saving operation performed by the second network device or the cell of the second network device; time information of the energy saving operation performed by the second network device or the cell of the second network device; a corresponding operation of the first network device performed during execution of the energy saving operation by the second network device or the cell of the second network device; time information of the corresponding operation performed by the first network device; or a condition that the second network device or the cell of the second network device needs to satisfy to execute the energy saving policy.

For the foregoing energy saving policy, refer to the first aspect. Details are not described herein again.

In a possible design, the method further includes: obtaining at least one of predicted network load, predicted network coverage, or a predicted network service type from the AI device.

In a possible design, the outputting first data includes: obtaining query information from the AI device; and outputting response information, where the response information is in response to the query information, and the response information indicates the first data.

In a possible design, the query information indicates at least one of the following: a service type predicted by the AI device supporting AI prediction, time information of the energy saving policy output by the AI device, information included in the energy saving policy, the first data that the first network device needs to provide, or the first data that the second network device needs to provide.

In a possible design, the method further includes: obtaining at least one of the following: service information of interest to the first network device and/or the second network device, time information of interest to the first network device and/or the second network device, or condition information of interest to the first network device and/or the second network device.

In a possible design, the first data indicates at least one of the following: an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

In a possible design, the method further includes: outputting second data, where the second data indicates network statuses of the first network device and the second network device during execution of the energy saving policy by the first network device and the second network device; and obtaining an updated energy saving policy from the AI device, where the updated energy saving policy is determined based on the second data.

According to a third aspect, an energy saving method is provided. The method is performed by a second network device, or may be performed by a component (a processor, a chip, a circuit, or another component) configured in the second network device, or may be performed by a software module, or the like. The method includes:
outputting first data, where the first data is used to determine an energy saving policy; and obtaining the energy saving policy from an artificial intelligence AI device. The energy saving policy indicates at least one of the following: a scenario type tag of the second network device or a cell of the second network device; an energy saving operation performed by the second network device or the cell of the second network device; time information of the energy saving operation performed by the second network device or the cell of the second network device; a corresponding operation of a first network device performed during execution of the energy saving operation by the second network device or the cell of the second network device; time information of the corresponding operation performed by the first network device; or a condition that the second network device or the cell of the second network device needs to satisfy to perform the energy saving operation.

For the foregoing energy saving policy, refer to the first aspect. Details are not described herein again.

In a possible design, the method further includes: obtaining at least one of predicted network load, predicted network coverage, or a predicted network service type from the AI device.

In a possible design, the outputting first data includes: obtaining query information from the AI device; and outputting response information, where the response information is in response to the query information, and the response information indicates the first data.

In a possible design, the query information indicates at least one of the following: a service type predicted by the AI device supporting AI prediction, time information of the energy saving policy output by the AI device, information included in the energy saving policy, the first data that the first network device needs to provide, or the first data that the second network device needs to provide.

In a possible design, the method further includes: obtaining at least one of the following: service information of interest to the first network device and/or the second network device, time information of interest to the first network device and/or the second network device, or condition information of interest to the first network device and/or the second network device.

In a possible design, the first data indicates at least one of the following: an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

In a possible design, the method further includes: outputting second data, where the second data indicates a network status of the first network device and/or the second network device during execution of the energy saving policy by the first network device and the second network device; and obtaining an updated energy saving policy from the AI device, where the updated energy saving policy is determined based on the second data.

According to a fourth aspect, an energy saving method is provided. The method may be performed by a first network device, or by a component (a processor, a chip, a circuit, or another component) configured in the first network device, or by a software module, or the like. The method includes: obtaining first data from a second network device; determining an energy saving policy based on the first data; and outputting the energy saving policy. The energy saving policy indicates at least one of the following: a scenario type tag of the second network device or a cell of the second network device; an energy saving operation performed by the second network device or the cell of the second network device; time information of the energy saving operation performed by the second network device or the cell of the second network device; or a condition that the second network device or the cell of the second network device needs to satisfy to execute the energy saving policy.

According to the foregoing design, an AI module is deployed in the first network device (for example, a coverage station), and the coverage station performs an AI inference for the energy saving policy based on the first data reported by the second network device (for example, a capacity station), thereby improving accuracy and robustness of the energy saving policy. Optionally, in comparison with the design in the first aspect, the AI module is integrated in the coverage station, and the coverage station does not need to perform operations such as reporting the first data to the AI device and receiving the energy saving policy from the AI device, thereby reducing air interface overheads of the coverage station.

In a possible design, the energy saving policy further indicates at least one of the following: a corresponding operation of the first network device performed during execution of the energy saving operation by the second network device or the cell of the second network device; and time information of the corresponding operation performed by the first network device.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device: power adjustment or beam encryption.

In a possible design, the determining an energy saving policy based on the first data includes: predicting at least one of network load, network coverage, or a network service type based on the first data; and determining the energy saving policy based on at least one of the predicted network load, the predicted network coverage, or the predicted network service type.

In a possible design, the method further includes: outputting at least one of the predicted network load, the predicted network coverage, or the predicted network service type.

In a possible design, the obtaining first data from a second network device includes: outputting query information; and obtaining response information from the second network device, where the response information is in response to the query information, and the response information indicates the first data.

In a possible design, the outputting query information includes: periodically outputting the query information; or
outputting the query information when a preset condition is satisfied.

In a possible design, the query information indicates at least one of the following: a service type predicted by the first network device supporting artificial intelligence AI prediction, time information of the energy saving policy output by the first network device, information included in the energy saving policy, or the first data that the second network device needs to provide.

In a possible design, the method further includes: obtaining at least one of the following: service information of interest to the second network device, time information of interest to the second network device, or condition information of interest to the second network device.

In a possible design, the first data indicates at least one of the following: an operating parameter of the second network device; networking information of the second network device; scenario information of the second network device; cell information of the second network device; hardware resource information of the second network device; an operator policy of the second network device; an air interface resource of the second network device; a transport network layer resource of the second network device; cell capacity information of the second network device; or slice capacity information of the second network device; or information about a terminal device served by the second network device.

In a possible design, the method further includes: obtaining second data from the second network device, where the second data indicates a network status of the second network device during execution of the energy saving policy by the second network device; updating the energy saving policy based on the second data; and outputting an updated energy saving policy.

According to a fifth aspect, a cell energy saving method is provided. The method may be performed by a second network device, or by a component (a processor, a chip, a circuit, or another component) configured in the second network device, or by a software module, or the like. The method includes: outputting first data, where the first data is used to determine an energy saving policy; and obtaining the energy saving policy from a first network device. The energy saving policy indicates at least one of the following: a scenario type tag of the second network device or a cell of the second network device; an energy saving operation performed by the second network device or the cell of the second network device; time information of the energy saving operation performed by the second network device or the cell of the second network device; or a condition that the second network device or the cell of the second network device needs to satisfy to execute the energy saving policy. In a possible design, the energy saving policy further indicates at least one of the following: a corresponding operation of the first network device performed during execution of the energy saving operation by the second network device or the cell of the second network device, or time information of the corresponding operation performed by the first network device.

For descriptions of the energy saving policy, refer to the first aspect and/or the fourth aspect. Details are not described herein again.

In a possible design, the method further includes: obtaining at least one of predicted network load, predicted network coverage, or a predicted network service type from the first network device.

In a possible design, the outputting first data includes: obtaining query information from the first network device; and outputting response information, where the response information is in response to the query information, and the response information indicates the first data.

In a possible design, the query information indicates at least one of the following: a service type predicted by the first network device supporting artificial intelligence AI prediction, time information of the energy saving policy output by the first network device, information included in the energy saving policy, or the first data that the second network device needs to provide.

In a possible design, the method further includes: obtaining at least one of the following: service information of interest to the second network device, time information of interest to the second network device, or condition information of interest to the second network device.

In a possible design, the first data indicates at least one of the following: an operating parameter of the second network device; networking information of the second network device; scenario information of the second network device; cell information of the second network device; hardware resource information of the second network device; an operator policy of the second network device; an air interface resource of the second network device; a transport network layer resource of the second network device; cell capacity information of the second network device; or slice capacity information of the second network device; or information about a terminal device served by the second network device.

In a possible design, the method further includes: outputting second data, where the second data indicates a network status of the second network device during execution of the energy saving policy by the second network device; and obtaining an updated energy saving policy from the first network device, where the updated energy saving policy is determined based on the second data.

According to a sixth aspect, an energy saving method is provided. The method may be performed by a second network device, or by a component (a processor, a chip, a circuit, or another component) configured in the second network device, or by a software module, or the like. The method includes: obtaining first data from a first network device; determining an energy saving policy based on the first data; and outputting the energy saving policy. The energy saving policy indicates at least one of the following: a corresponding operation of the first network device performed during execution of an energy saving operation corresponding to the energy saving policy by the second network device or a cell of the second network device; or time information of the corresponding operation performed by the first network device.

According to the foregoing design, an AI module is deployed in the second network device, for example, a capacity station. The capacity station performs an AI inference for the energy saving policy based on the first data reported by the first network device, for example, a coverage station, to improve robustness and accuracy of the energy saving policy.

In a possible design, the energy saving policy further indicates at least one of the following: a scenario type tag of the second network device or the cell of the second network device; the energy saving operation performed by the second network device or the cell of the second network device; time information of the energy saving operation performed by the second network device or the cell of the second network device; or a condition that the second network device or the cell of the second network device needs to satisfy to execute the energy saving policy.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device or the cell of the second network device: power adjustment or beam encryption.

In a possible design, the determining an energy saving policy based on the first data includes: predicting at least one of network load, network coverage, or a network service type based on the first data; and determining the energy saving policy based on at least one of the predicted network load, the predicted network coverage, or the predicted network service type.

In a possible design, the method further includes: outputting at least one of the predicted network load, the predicted network coverage, or the predicted network service type.

In a possible design, the obtaining first data from a first network device includes: outputting query information; and obtaining response information from the first network device, where the response information is in response to the query information, and the response information indicates the first data.

In a possible design, the outputting query information includes: periodically outputting the query information; or outputting the query information when a preset condition is satisfied.

In a possible design, the query information indicates at least one of the following: a service type predicted by the second network device supporting artificial intelligence AI prediction, time information of the energy saving policy output by the second network device, information included in the energy saving policy, or the first data that the first network device needs to provide.

In a possible design, the method further includes: obtaining at least one of the following: service information of interest to the first network device, time information of interest to the first network device, or condition information of interest to the first network device.

In a possible design, the first data indicates at least one of the following: an operating parameter of the first network device; networking information of the first network device; scenario information of the first network device; cell information of the first network device; hardware resource information of the first network device; an operator policy of the first network device; an air interface resource of the first network device; a transport network layer resource of the first network device; cell capacity information of the first network device; slice capacity information of the first network device; or information about a terminal device served by the first network device.

In a possible design, the method further includes: obtaining second data from the first network device, where the second data indicates a network status of the first network device during execution of the energy saving policy by the first network device; updating the energy saving policy based on the second data; and outputting an updated energy saving policy.

According to a seventh aspect, an energy saving method is provided. The method may be performed by a first network device, or by a component (a processor, a chip, a circuit, or another component) configured in the first network device, or by a software module, or the like. The method includes: outputting first data, where the first data is used to determine an energy saving policy; and obtaining the energy saving policy from a second network device. The energy saving policy indicates at least one of the following: a corresponding operation of the first network device performed during execution of the energy saving operation by the second network device or a cell of the second network device; or time information of the corresponding operation performed by the first network device.

In a possible design, the energy saving policy further indicates at least one of the following: a scenario type tag of the second network device or the cell of the second network device; the energy saving operation performed by the second network device or the cell of the second network device; time information of the energy saving operation performed by the second network device or the cell of the second network device; or a condition that the second network device or the cell of the second network device needs to satisfy to execute the energy saving policy.

For descriptions of the energy saving policy, refer to the first aspect and/or the sixth aspect. Details are not described herein again.

In a possible design, the method further includes: obtaining at least one of predicted network load, predicted network coverage, or a predicted network service type from the second network device.

In a possible design, the outputting first data includes: obtaining query information from the second network device; and outputting response information, where the response information is in response to the query information, and the response information indicates the first data.

In a possible design, the query information indicates at least one of the following: a service type predicted by the second network device supporting artificial intelligence AI prediction, time information of the energy saving policy output by the second network device, information included in the energy saving policy, or the first data that the first network device needs to provide.

In a possible design, the method further includes: obtaining at least one of the following: service information of interest to the first network device, time information of interest to the first network device, or condition information of interest to the first network device.

In a possible design, the first data indicates at least one of the following: an operating parameter of the first network device; networking information of the first network device; scenario information of the first network device; cell information of the first network device; hardware resource information of the first network device; an operator policy of the first network device; an air interface resource of the first network device; a transport network layer resource of the first network device; cell capacity information of the first network device; slice capacity information of the first network device; or information about a terminal device served by the first network device.

In a possible design, the method further includes: outputting second data, where the second data indicates a network status of the first network device during execution of the energy saving policy by the first network device; and obtaining an updated energy saving policy from the second network device, where the updated energy saving policy is determined based on the second data.

According to an eighth aspect, an apparatus is provided. For beneficial effects, refer to descriptions in the first aspect. The apparatus may be an AI device, an apparatus configured in an AI device, or an apparatus that can be used in conjunction with an AI device. In a design, the apparatus includes units in one-to-one correspondence with the method/operations/steps/actions described in the first aspect. The unit may be implemented by a hardware circuit, software, or a combination of a hardware circuit and software. For example, the apparatus may include a processing unit and a communication unit, and the processing unit and the communication unit may perform corresponding functions in any one of the design examples in the first aspect. Specifically, the communication unit is configured to obtain first data from a first network device and a second network device; the processing unit is configured to determine an energy saving policy based on the first data; and the communication unit is further configured to output the energy saving policy. The energy saving policy indicates at least one of the following: a scenario type tag of the second network device or a cell of the second network device, an energy saving operation performed by the second network device or the cell of the second network device; time information of the energy saving operation performed by the second network device or the cell of the second network device; a corresponding operation of the first network device performed during execution of the energy saving operation by the second network device or the cell of the second network device; time information of the corresponding operation performed by the first network device; or a condition that the second network device or the cell of the second network device needs to satisfy to execute the energy saving policy. For specific execution processes of the processing unit and the communication unit, refer to the first aspect. Details are not described herein again.

According to a ninth aspect, an apparatus is provided. For beneficial effects, refer to descriptions in the first aspect. The apparatus includes a processor, configured to implement the method described in the first aspect. The apparatus may further include a memory, configured to store instructions and/or data. The memory is coupled to the processor, and when executing program instructions stored in the memory, the processor may implement the method described in the first aspect. The apparatus may further include a communication interface. The communication interface is configured to allow the apparatus to communicate with another device. For example, the communication interface may be a transceiver, a circuit, a bus, a module, a pin, or a communication interface of another type. In a possible design, the apparatus includes:
a memory, configured to store program instructions;
a processor, configured to determine an energy saving policy based on first data; and
a communication interface, configured to obtain the first data from a first network device and a second network device, output the energy saving policy, and so on. For specific execution processes of the communication interface and the processor, refer to descriptions in the first aspect. Details are not described again.

According to a tenth aspect, an apparatus is provided. For beneficial effects, refer to descriptions in the second aspect. The apparatus may be a first network device, an apparatus configured in the first network device, or an apparatus that can be used in conjunction with the first network device. In a design, the apparatus includes units that perform and are in one-to-one correspondence with the method/operations/steps/actions described in the second aspect. The unit may be implemented by a hardware circuit, software, or a combination of a hardware circuit and software. For example, the apparatus may include a processing unit and a communication unit, and the processing unit and the communication unit may perform corresponding functions in any one of the design examples in the second aspect. Specifically, the communication unit is configured to output first data, where the first data is used to determine an energy saving policy, obtain the energy saving policy from an AI device, and so on. Optionally, the processing unit is configured to perform an energy saving operation based on an indication of the energy saving policy. For specific execution processes of the processing unit and the communication unit, refer to the second aspect. Details are not described herein again.

According to an eleventh aspect, an apparatus is provided. For beneficial effects, refer to descriptions in the second aspect. The apparatus includes a processor, configured to implement the method described in the second aspect. The apparatus may further include a memory, configured to store instructions and/or data. The memory is coupled to the processor, and when executing program instructions stored in the memory, the processor may implement the method described in the second aspect. The apparatus may further include a communication interface. The communication interface is configured to allow the apparatus to communicate with another device. For example, the communication interface may be a transceiver, a circuit, a bus, a module, a pin, or a communication interface of another type, and the another device may be a second network device, a terminal device, or the like. In a possible design, the apparatus includes:
a memory, configured to store program instructions;
a communication interface, configured to output first data, where the first data is used to determine an energy saving policy, obtain the energy saving policy from an AI device, and so on; and
optionally, a processor, configured to perform a corresponding energy saving operation based on an indication of the energy saving policy, and so on. For specific execution processes of the communication interface and the processor, refer to descriptions in the second aspect. Details are not described again.

According to a twelfth aspect, an apparatus is provided. For beneficial effects, refer to descriptions in the third aspect. The apparatus may be a second network device, or an apparatus configured in the second network device, or an apparatus that can be used in conjunction with the second network device. In a design, the apparatus includes units that perform and are in one-to-one correspondence with the method/operations/steps/actions described in the third aspect. The unit may be implemented by a hardware circuit, software, or a combination of a hardware circuit and software. For example, the apparatus may include a processing unit and a communication unit, and the processing unit and the communication unit may perform corresponding functions in any one of the design examples in the third aspect. Specifically, the communication unit is configured to: output first data, where the first data is used to determine an energy saving policy, obtain the energy saving policy from an AI device, and so on. Optionally, the processing unit is configured to perform an energy saving operation based on an indication of the energy saving policy. For specific execution processes of the processing unit and the communication unit, refer to the third aspect. Details are not described herein again.

According to a thirteenth aspect, an apparatus is provided. For beneficial effects, refer to descriptions in the third aspect. The apparatus includes a processor, configured to implement the method described in the third aspect. The apparatus may further include a memory, configured to store instructions and/or data. The memory is coupled to the processor, and when executing program instructions stored in the memory, the processor may implement the method described in the third aspect. The apparatus may further include a communication interface. The communication interface is configured to allow the apparatus to communicate with another device. For example, the communication interface may be a transceiver, a circuit, a bus, a module, a pin, or a communication interface of another type, and the another device may be a second network device, a terminal device, or the like. In a possible design, the apparatus includes:
a memory, configured to store program instructions;
a communication interface, configured to output first data, where the first data is used to determine an energy saving policy, and obtain an energy saving policy from the AI device; and optionally, a processor, configured to perform a corresponding energy saving operation based on an indication of the energy saving policy. For specific execution processes of the communication interface and the processor, refer to descriptions in the third aspect. Details are not described again.

According to a fourteenth aspect, an apparatus is provided. For beneficial effects, refer to descriptions in the fourth aspect. The apparatus may be a first network device, an apparatus configured in the first network device, or an apparatus that can be used in conjunction with the first network device. In a design, the apparatus includes units that perform and are in one-to-one correspondence with the method/operations/steps/actions described in the fourth aspect. The unit may be implemented by a hardware circuit, software, or a combination of a hardware circuit and software. For example, the apparatus may include a processing unit and a communication unit, and the processing unit and the communication unit may perform corresponding functions in any one of the design examples in the fourth aspect. Specifically, the communication unit is configured to obtain first data from a second network device; the processing unit is configured to determine an energy saving policy based on the first data; and the communication unit is further configured to output the energy saving policy. The energy saving policy indicates at least one of the following: a scenario type tag of the second network device or a cell of the second network device; an energy saving operation performed by the second network device or the cell of the second network device; time information of the energy saving operation performed by the second network device or the cell of the second network device; or a condition that the second network device or the cell of the second network device needs to satisfy to execute the energy saving policy. For specific execution processes of the processing unit and the communication unit, refer to the fourth aspect. Details are not described herein again.

According to a fifteenth aspect, an apparatus is provided. For beneficial effects, refer to descriptions in the fourth aspect. The apparatus includes a processor, configured to implement the method described in the fourth aspect. The apparatus may further include a memory, configured to store instructions and/or data. The memory is coupled to the processor, and when executing program instructions stored in the memory, the processor may implement the method described in the fourth aspect. The apparatus may further include a communication interface. The communication interface is configured to allow the apparatus to communicate with another device. For example, the communication interface may be a transceiver, a circuit, a bus, a module, a pin, or a communication interface of another type, and the another device may be a second network device, a terminal device, or the like. In a possible design, the apparatus includes:
a memory, configured to store program instructions;
a processor, configured to determine an energy saving policy based on first data; and
a communication interface, configured to obtain the first data from the second network device, output an energy saving policy, and so on. For specific execution processes of the communication interface and the processor, refer to descriptions in the fourth aspect. Details are not described again.

According to a sixteenth aspect, an apparatus is provided. For beneficial effects, refer to descriptions in the fifth aspect. The apparatus may be a second network device, or an apparatus configured in the second network device, or an apparatus that can be used in conjunction with the second network device. In a design, the apparatus includes units that perform and are in one-to-one correspondence with the method/operations/steps/actions described in the fifth aspect. The unit may be implemented by a hardware circuit, software, or a combination of a hardware circuit and software. For example, the apparatus may include a processing unit and a communication unit, and the processing unit and the communication unit may perform corresponding functions in any one of the design examples in the fifth aspect. Specifically, the communication unit is configured to output first data, where the first data is used to determine an energy saving policy, and obtain the energy saving policy from a first network device. Optionally, the processing unit is configured to perform a corresponding energy saving operation based on an indication of the energy saving policy. For specific execution processes of the processing unit and the communication unit, refer to the fifth aspect. Details are not described herein again.

According to a seventeenth aspect, an apparatus is provided. For beneficial effects, refer to descriptions in the fifth aspect. The apparatus includes a processor, configured to implement the method described in the fifth aspect. The apparatus may further include a memory, configured to store instructions and/or data. The memory is coupled to the processor, and when executing program instructions stored in the memory, the processor may implement the method described in the fifth aspect. The apparatus may further include a communication interface. The communication interface is configured to allow the apparatus to communicate with another device. For example, the communication interface may be a transceiver, a circuit, a bus, a module, a pin, or a communication interface of another type, and the another device may be a second network device, a terminal device, or the like. In a possible design, the apparatus includes:
a memory, configured to store program instructions;
a communication interface, configured to output first data, where the first data is used to determine an energy saving policy, and obtain the energy saving policy from a first network device; and
optionally, a processor, configured to perform a corresponding energy saving operation based on an indication of the energy saving policy. For specific execution processes of the communication interface and the processor, refer to descriptions in the fifth aspect. Details are not described again.

According to an eighteenth aspect, an apparatus is provided. For beneficial effects, refer to descriptions in the sixth aspect. The apparatus may be a second network device, an apparatus configured in the second network device, or an apparatus that can be used in conjunction with the second network device. In a design, the apparatus includes units that perform and are in one-to-one correspondence with the method/operations/steps/actions described in the sixth aspect. The unit may be implemented by a hardware circuit, software, or a combination of a hardware circuit and software. For example, the apparatus may include a processing unit and a communication unit, and the processing unit and the communication unit may perform corresponding functions in any one of the design examples in the sixth aspect. Specifically, the communication unit is configured to obtain first data from a first network device; the processing unit is configured to determine an energy saving policy based on the first data; and the communication unit is further configured to output the energy saving policy. For specific execution processes of the processing unit and the communication unit, refer to the sixth aspect. Details are not described herein again.

According to a nineteenth aspect, an apparatus is provided. For beneficial effects, refer to descriptions in the sixth aspect. The apparatus includes a processor, configured to implement the method described in the sixth aspect. The apparatus may further include a memory, configured to store instructions and/or data. The memory is coupled to the processor, and when executing program instructions stored in the memory, the processor may implement the method described in the sixth aspect. The apparatus may further include a communication interface. The communication interface is configured to allow the apparatus to communicate with another device. For example, the communication interface may be a transceiver, a circuit, a bus, a module, a pin, or a communication interface of another type, and the another device may be a second network device, a terminal device, or the like. In a possible design, the apparatus includes:
a memory, configured to store program instructions;
a communication interface, configured to obtain first data from a first network device, and output an energy saving policy; and
a processor, configured to determine the energy saving policy based on the first data. For specific execution processes of the communication interface and the processor, refer to descriptions in the sixth aspect. Details are not described again.

According to a twentieth aspect, an apparatus is provided. For beneficial effects, refer to descriptions in the seventh aspect. The apparatus may be a first network device, an apparatus configured in the first network device, or an apparatus that can be used in conjunction with the first network device. In a design, the apparatus includes units that perform and are in one-to-one correspondence with the method/operations/steps/actions described in the seventh aspect. The unit may be implemented by a hardware circuit, software, or a combination of a hardware circuit and software. For example, the apparatus may include a processing unit and a communication unit, and the processing unit and the communication unit may perform corresponding functions in any one of the design examples in the seventh aspect. Specifically, the communication unit is configured to output first data, where the first data is used to determine an energy saving policy and obtain the energy saving policy from a second network device. Optionally, the processing unit is configured to perform a corresponding energy saving operation based on an indication of the energy saving policy. For specific execution processes of the processing unit and the communication unit, refer to the seventh aspect. Details are not described herein again.

According to a twenty-first aspect, an apparatus is provided. For beneficial effects, refer to descriptions in the seventh aspect. The apparatus includes a processor, configured to implement the method described in the seventh aspect. The apparatus may further include a memory, configured to store instructions and/or data. The memory is coupled to the processor, and when executing program instructions stored in the memory, the processor may implement the method described in the seventh aspect. The apparatus may further include a communication interface. The communication interface is configured to allow the apparatus to communicate with another device. For example, the communication interface may be a transceiver, a circuit, a bus, a module, a pin, or a communication interface of another type, and the another device may be a second network device, a terminal device, or the like. In a possible design, the apparatus includes:
a memory, configured to store program instructions;
a communication interface, configured to output first data, where the first data is used to determine an energy saving policy, and obtain the energy saving policy from the second network device; and
optionally, a processor, configured to perform a corresponding energy saving operation based on an indication of the energy saving policy. For specific execution processes of the communication interface and the processor, refer to descriptions in the seventh aspect. Details are not described again.

According to a twenty-second aspect, an embodiment of this application further provides a computer-readable storage medium, including instructions. When the instructions are run on a computer, the computer is enabled to perform the method according to any one of the first aspect to the seventh aspect.

According to a twenty-third aspect, an embodiment of this application further provides a chip system. The chip system includes a processor, and may further include a memory, to implement the method according to any one of the first aspect to the seventh aspect. The chip system may include a chip, or may include a chip and another discrete component.

According to a twenty-fourth aspect, an embodiment of this application further provides a computer program product, including instructions. When the instructions are run on a computer, the computer is enabled to perform the method according to any one of the first aspect to the seventh aspect.

According to a twenty-fifth aspect, an embodiment of this application further provides a system. The system includes the apparatus according to the tenth aspect or the eleventh aspect, the apparatus according to the fourteenth aspect or the fifteenth aspect, or the apparatus according to the twentieth aspect or the twenty-first aspect, and the apparatus according to the twelfth aspect or the thirteenth aspect, the apparatus according to the sixteenth aspect or the seventeenth aspect, or the apparatus according to the eighteenth aspect or the nineteenth aspect. Optionally, the system further includes the apparatus according to the eighth aspect or the ninth aspect.

### BRIEF DESCRIPTION OF DRAWINGS

FIG. 1 is a schematic diagram of a network architecture according to an embodiment of this application;
FIG. 2a, FIG. 2b, FIG. 2c, and FIG. 2d are schematic diagrams of a protocol stack according to an embodiment of this application;
FIG. 3a, FIG. 3b, FIG. 3c, and FIG. 3d are schematic diagrams of an AI model according to an embodiment of this application;
FIG. 4 is a flowchart of an energy saving method according to Embodiment 1 of this application;
FIG. 5 is another flowchart of the energy saving method according to Embodiment 1 of this application;
FIG. 6 is a flowchart of an energy saving method according to Embodiment 2 of this application;
FIG. 7 is another flowchart of the energy saving method according to Embodiment 2 of this application;
FIG. 8 is a flowchart of an energy saving method according to Embodiment 3 of this application;
FIG. 9 is another flowchart of the energy saving method according to Embodiment 3 of this application;
FIG. 10a and FIG. 10b is a flowchart of an energy saving method according to Embodiment 4 of this application;
FIG. 11 is a schematic diagram of a structure of an apparatus according to an embodiment of this application;
FIG. 12 is a schematic diagram of a structure of an AI device according to an embodiment of this application; and
FIG. 13 is a schematic diagram of a structure of an access network device according to an embodiment of this application.

### DESCRIPTION OF EMBODIMENTS

The following describes the technical solutions in embodiments of this application with reference to the accompanying drawings in embodiments of this application.

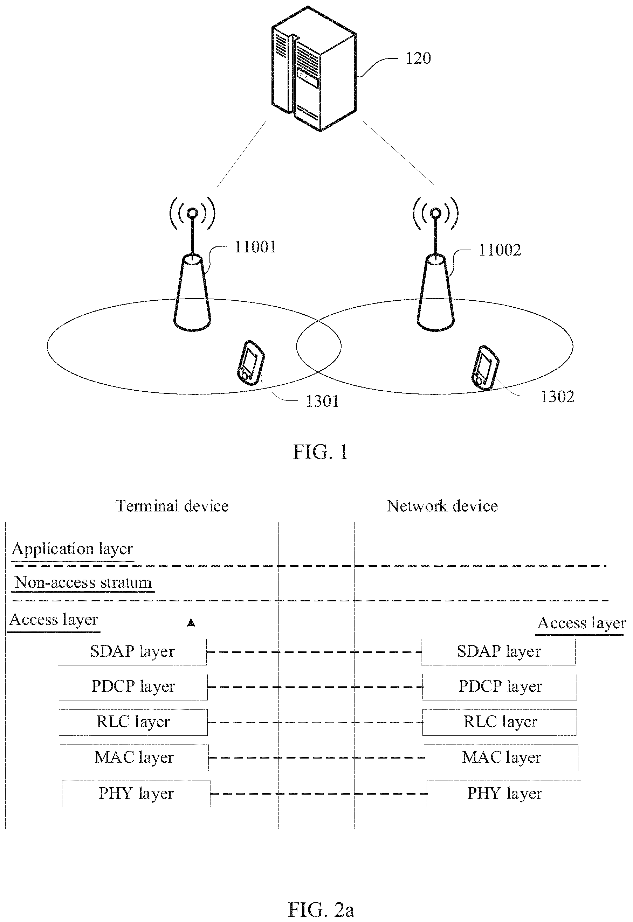

FIG. 1 is a schematic diagram of a network architecture to which embodiments of this application are applicable. As shown in FIG. 1, a terminal device (for example, a terminal device 1301 or a terminal device 1302) may access a radio network, to obtain a service of an external network (for example, the Internet) via the radio network, or communicate with another device via the radio network, for example, may communicate with another terminal device. The radio network includes a radio access network (radio access network, RAN) and a core network (core network, CN). The RAN is configured to connect the terminal device to the radio network, and the CN is configured to manage the terminal device and provide a gateway for communicating with the external network.

The following separately describes in detail the terminal device, the RAN, and the CN in FIG. 1.

### 1. Terminal device

The terminal device may be referred to as a terminal for short, and is a device having a wireless transceiver function. The terminal device may be mobile or fixed. The terminal device may be deployed on land, where the deployment includes indoor or outdoor, or handheld or vehicle-mounted deployment, may be deployed on water (for example, on a ship), or may be deployed in air (for example, on an aircraft, a balloon, or a satellite). The terminal device may be a mobile phone, a pad, a computer with a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in telemedicine (telemedicine), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, a vehicle-mounted device, a wearable device, a terminal device in the future 5^{th} generation (the 5^{th} generation, 5G) network, a terminal device in the future evolved public land mobile network (public land mobile network, PLMN), or the like. The terminal device may also be referred to as user equipment (user equipment, UE) sometimes. Optionally, the terminal device may communicate with a plurality of access network devices supporting different technologies. For example, the terminal device may communicate with an access network device supporting long term evolution (long term evolution, LTE), or may communicate with an access network device supporting 5G, or may be connected to an access network device supporting LTE and an access network device supporting 5G. This is not limited in embodiments of this application.

In embodiments of this application, an apparatus for implementing the function of the terminal device may be a terminal device, or an apparatus that can support the terminal device in implementing the function, for example, a chip system, a hardware circuit, a software module, or a combination of a hardware circuit and a software module. The apparatus may be installed in the terminal device or may be used in conjunction with the terminal device. In the technical solutions provided in embodiments of this application, an example in which the apparatus for implementing the function of the terminal device is a terminal device and the terminal device is UE is used to describe the technical solutions provided in embodiments of this application.

### 2. RAN

The RAN may include one or more RAN devices, for example, a RAN device 11001 and a RAN device 11002. An interface between the RAN device and the terminal device may be a Uu interface (or referred to as an air interface). In future communication, names of these interfaces may remain unchanged, or may be replaced with other names. This is not limited in this application.

The RAN device may be a node or a device that connects the terminal device to a radio network, and the RAN device may also be referred to as a network device or a base station. For example, the RAN device includes but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission and reception point (transmission and reception point, TRP), a transmission point (transmission point, TP), a mobile switching center, and/or the like. Alternatively, the access network device may be at least one of a radio controller, a central unit (central unit, CU), a distributed unit (distributed unit, DU), a central unit control plane (CU control plane, CU-CP) node, a central unit user plane (CU user plane, CU-UP) node, an integrated access and backhaul (integrated access and backhaul, IAB) node, or the like in a cloud radio access network (cloud radio access network, CRAN) scenario. Alternatively, the access network device may be a relay station, an access point, a vehicle-mounted device, a terminal device, a wearable device, an access network device in a future 5G network, an access network device in a future evolved public land mobile network (public land mobile network, PLMN), or the like.

In embodiments of this application, an apparatus for implementing the function of the access network device may be an access network device, or an apparatus that can support the access network device in implementing the function, for example, a chip system, a hardware circuit, a software module, or a combination of a hardware circuit and a software module. The apparatus may be installed in the access network device or may be used in conjunction with the access network device. In embodiments of this application, the chip system may include a chip, or may include a chip and another discrete component. In the technical solutions provided in embodiments of this application, an example in which the apparatus for implementing the function of the access network device is an access network device and the access network device is a base station is used to describe the technical solutions provided in embodiments of this application.

### (1) Protocol layer structure

Communication between the RAN device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

In an example of data transmission between a network device and a terminal device, data needs to be transmitted over user plane protocol layers, for example, over an SDAP layer, a PDCP layer, an RLC layer, a MAC layer, and a physical layer. The SDAP layer, the PDCP layer, the RLC layer, the MAC layer, and the physical layer may also be collectively referred to as access layers. Based on a transmission direction of the data, the transmission may be sending or receiving, and each layer includes a sending part and a receiving part. Downlink data transmission is used as an example. FIG. 2a is a schematic diagram of downlink data transmission between layers. In FIG. 2a, a downward arrow represents data sending, and an upward arrow represents data receiving. After obtaining data from an upper layer, the PDCP layer transmits the data to the RLC layer and the MAC layer, the MAC layer generates transport blocks, and then wireless transmission is performed via the physical layer. Data is correspondingly encapsulated at each layer. For example, data received by a specific layer from an upper layer of the layer is considered as a service data unit (service data unit, SDU) of the layer, and is encapsulated into a protocol data unit (protocol data unit, PDU) by the layer, and then transmitted to a next layer.

For example, it may be further learned from FIG. 2a that the terminal device may further have an application layer and a non-access stratum. The application layer may be configured to provide a service for an application program installed on the terminal device. For example, downlink data received by the terminal device may be sequentially transmitted from a physical layer to the application layer, and then provided to the application program by the application layer. For another example, the application layer may obtain data generated by the application program, sequentially transmit the data to the physical layer, and send the data to another communication apparatus. The non-access stratum may be configured to forward user data, for example, forward uplink data received from the application layer to the SDAP layer, or forward downlink data received from the SDAP layer to the application layer.

### (2) Central unit (central unit, CU) and distributed unit (distributed unit, DU)

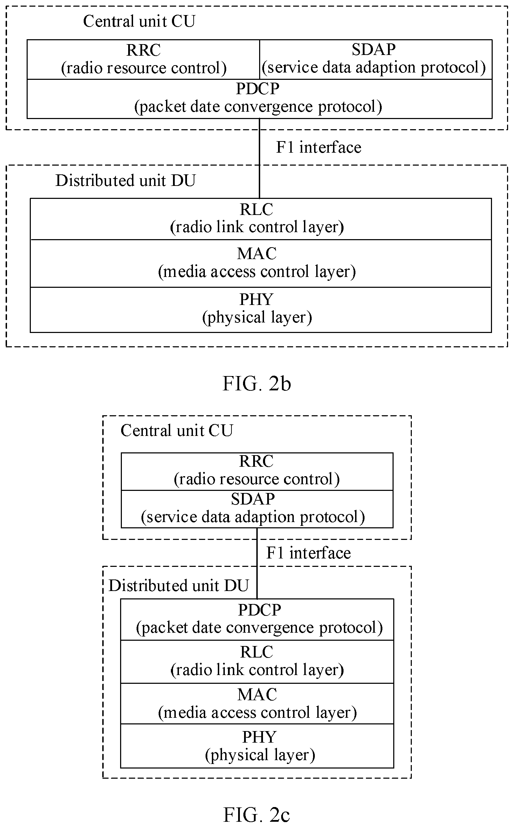

In this embodiment of this application, the RAN device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on protocol layers of the radio network. For example, as shown in FIG. 2b, functions of the PDCP layer and protocol layers above the PDCP layer are disposed on the CU, and functions of protocol layers below the PDCP layer (for example, the RLC layer and the MAC layer) are set on the DU. For another example, as shown in FIG. 2c, functions of protocol layers above the PDCP layer are set on the CU, and functions of the PDCP layer and protocol layers below the PDCP layer are set on the DU.

It may be understood that division of processing functions of the CU and the DU based on the protocol layers is merely an example, and there may be other division. For example, the CU or the DU may be divided into functions having more protocol layers. For another example, the CU or the DU may be further divided into some processing functions having protocol layers. In a design, a part of functions of the RLC layer and functions of protocol layers above the RLC layer are set on the CU, and the remaining functions of the RLC layer and functions of protocol layers below the RLC layer are set on the DU. In another design, division of functions of the CU or the DU may alternatively be performed based on service types or other system requirements. For example, division may be performed based on latencies. Functions whose processing time needs to satisfy a delay requirement are set on the DU, and functions whose processing time does not need to satisfy the delay requirement are set on the CU.. In another design, the CU may alternatively have one or more functions of the core network. For example, the CU may be disposed on a network side to facilitate centralized management. In another design, a radio unit (radio unit, RU) of the DU is disposed remotely. The RU has a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When the PHY layer is used for sending, functions of the PHY layer may include a cyclic redundancy check (cyclic redundancy check, CRC) code addition, channel coding, rate matching, scrambling, modulation, layer mapping, precoding, resource mapping, physical antenna mapping, and/or a radio frequency sending function. When the PHY layer is used for receiving, functions of the PHY layer may include CRC, channel decoding, rate de-matching, descrambling, demodulation, layer demapping, channel detection, resource demapping, physical antenna demapping, and/or a radio frequency receiving function. The higher-layer functions of the PHY layer may include a part of functions of the PHY layer. For example, the part of functions is more similar to that of the MAC layer. The lower-layer functions of the PHY layer may include another part of functions of the PHY layer. For example, the another part of functions is more similar to a radio frequency function. For example, the higher-layer functions of the PHY layer may include CRC code addition, channel coding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include CRC code addition, channel coding, rate matching, scrambling, modulation, layer mapping, and precoding, and the lower-layer functions of the PHY layer may include resource mapping, physical antenna mapping, and radio frequency sending functions.

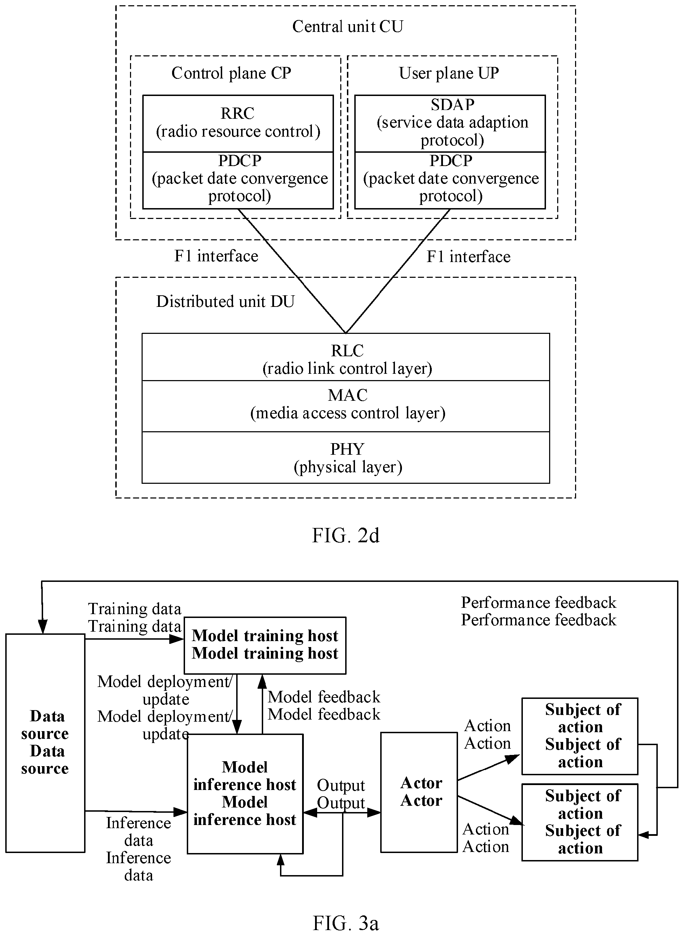

For example, a function of the CU may be implemented by one entity, or may be implemented by different entities. For example, as shown in FIG. 2d, the functions of the CU may be further divided. To be specific, a control plane and a user plane are separated and are implemented by different entities: a control plane CU entity (that is, a CU-CP entity) and a user plane CU entity (that is, a CU-UP entity). The CU-CP entity and the CU-UP entity may be coupled to the DU to jointly implement functions of the RAN device.

It should be noted that, in the architectures shown in FIG. 2b to FIG. 2d, signaling generated by the CU may be sent to the terminal device by using the DU, or signaling generated by the terminal device may be sent to the CU by using the DU. For example, signaling of the RRC layer or the PDCP layer is finally processed into signaling of the physical layer and then sent to the terminal device, or is obtained by conversion of received physical layer signaling. Based on such architectures, the signaling of the RRC layer or PDCP layer may be considered to be sent by using the DU, or sent by using the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by the modules also fall within the protection scope of embodiments of this application.

### 3. CN

The CN may include one or more CN devices, for example, a CN device 120. In a 5^{th} generation (5^{th} generation, 5G) communication system, which is used as an example, the CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

In embodiments of this application, an apparatus for implementing a function of a core network device may be a core network device, or an apparatus that can support the core network device in implementing the function, for example, a chip system, a hardware circuit, a software module, or a combination of a hardware circuit and a software module. The apparatus may be installed in the core network device or may be used in conjunction with the core network device. In the technical solutions provided in embodiments of this application, an example in which the apparatus for implementing the function of the core network device is a core network device is used to describe the technical solutions provided in embodiments of this application.

It should be understood that a quantity of devices in a communication system shown in FIG. 1 is merely an example, and is not limited in embodiments of this application. In actual application, the communication system may include more terminal devices and more RAN devices, and may further include another device.

The network architecture shown in FIG. 1 may be used in communication systems of various radio access technologies (radio access technologies, RATs), for example, in a 4G (or referred to as LTE) communication system, a 5G (or referred to as new radio (new radio, NR)) communication system, or a transition system between an LTE communication system and a 5G communication system. The transition system may also be referred to as a 4.5G communication system, or may be a future communication system such as a 6G communication system. The network architecture and service scenarios described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to resolve a similar technical problem as the communication network architecture evolves and a new service scenario emerges.

In a wireless communication system, there are concepts of a coverage station and a capacity station. The coverage station is a station set up to ensure network coverage. The coverage station may be referred to as a first-type station or another name. The capacity station is a station set up to increase a capacity or increase a system throughput. The capacity station may be referred to as a second-type station or another name. For example, the capacity station includes an additional station that is added to improve a maximum load capability of a specific area in an area with no restriction on network coverage, or an additional station that is introduced in a network coverage area in which a capacity requirement is high is referred to as a capacity station. For example, a base station A is a base station used to cover a specific area, and signal quality in the area is good, but a capacity of the base station A is insufficient and is difficult to expand. In this case, a station added near the base station A may be used as a capacity station. In a design, the coverage station may be an LTE base station, and the capacity station may be an NR base station.

In a design, a cell switch-off energy saving policy may be used. For example, after the coverage station determines that a capacity of a current area is not restricted, a cell of the capacity station may be switched off, where the cell of the capacity station may be referred to as a capacity booster (capacity booster) cell. The following problem may exist when the foregoing energy saving policy is used: robustness of the cell switch-off energy saving policy is low. The robustness may refer to stability. When the robustness of the cell switch-off energy saving policy is low, it may be considered that the stability of the cell switch-off energy saving policy is low. In this case, the capacity station may be frequently restarted, UE may be frequently handed over and reconfigured, and so on. For example, after the coverage station determines that the cell of the capacity station can be switched off to enter an energy saving state, if heavy traffic occurs in a coverage area of the coverage station, the cell of the capacity station may need to be restarted. In this case, in a scenario in which network traffic fluctuates, the cell of the capacity station frequently switches between an on state and an off state, resulting in frequent restart of the capacity station and frequent handover and reconfiguration of the UE.

An embodiment of this application provides an energy saving method. In the method, an artificial intelligence (artificial intelligence, AI) technology is combined with an energy saving policy to enable AI-based prediction on a network running status, to infer an accurate energy saving policy, thereby improving robustness of the energy saving policy. For example, in a design, an AI device may receive first data from a coverage station and/or a capacity station; and the AI device performs an AI inference on the first data based on an AI model to obtain an energy saving policy, sends the energy saving policy to the coverage station and/or the capacity station, and so on.

In some embodiments of this application, the energy saving policy may also be referred to as configuration information, an output parameter, an inferred parameter, first information, or another name. This is not limited.

As embodiments of this application relate to a process of inferring an energy saving policy by using the AI technology, for ease of understanding, the AI technology is first described. It may be understood that the description is not intended to limit embodiments of this application.

AI is a technology that simulates the human brain to perform complex computing. With improvement of data storage and capabilities, AI is applied in more scenarios. A study item (study item, SI) about application of AI to NR is proposed and adopted in Release 17 (release 17, R17) of the 3^{rd} generation partnership project (3^{rd} generation partnership project, 3GPP).

FIG. 3a is an example diagram of a first application framework of AI in a communication system. A data source (data source) is used to store training data and inference data. A model training host (model training host) analyzes or performs training based on the training data (training data) provided by the data source to obtain an AI model, and deploys the AI model on a model inference host (model inference host). The model inference host uses the AI model to perform inference based on the inference data provided by the data source and obtain an inference result. The inference result is used to provide AI-based reasonable prediction for network running or provide guidance for a network to perform policy configuration or policy adjustment. Related policy configuration or policy adjustment is uniformly planned by an actor (actor) entity, and is sent to a plurality of action subjects (for example, network entities) for execution. In addition, after a related policy is applied, specific network performance can be input to the data source for storage.

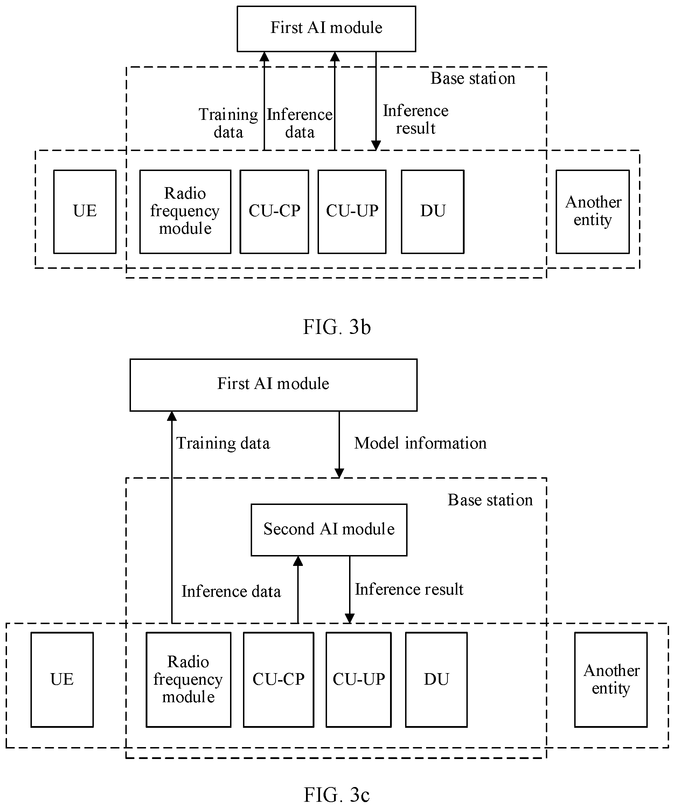

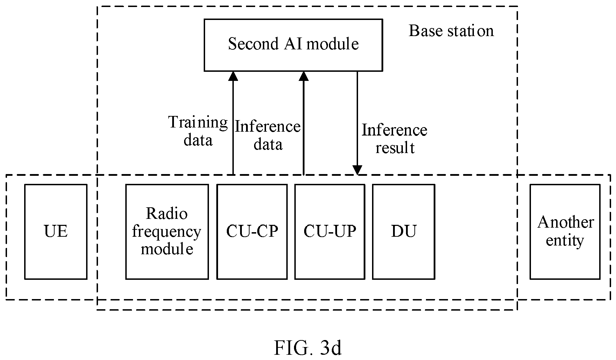

FIG. 3b, FIG. 3c, or FIG. 3d is an example diagram of a second application framework of AI in a communication system.

A first AI module independent of a base station receives training data. The first AI module analyzes or performs training based on the training data, to obtain an AI model. For a specific parameter, the first AI module may perform inference by using a corresponding AI model and inference data, to obtain the parameter, as shown in FIG. 3b; or the first AI module may send information about the AI model to a second AI module located in the base station (or described as being located in a RAN), and the second AI module performs inference by using a corresponding AI model and inference data, to obtain the parameter, as shown in FIG. 3c. Alternatively, the AI model used by the second AI module for inference may be obtained by the second AI module by receiving training data and performing training based on the training data, as shown in FIG. 3d.

It should be noted that, in the frameworks in FIG. 3a to FIG. 3d, the AI model may be referred to as a model for short, and may be considered as a mapping from an input measurement quantity (measurement information) to an output parameter. The input measurement quantity may be one or more measurement quantities, and the output parameter may be one or more parameters. The training data may include a known input measurement quantity, or include a known input measurement quantity and a corresponding output parameter, and is used to train the AI model. The training data may be data from the base station, the CU, the CU-CP, the CU-UP, the DU, the RU, the UE, and/or another entity, and/or data inferred by using the AI technology. This is not limited. The inference data includes the input measurement quantity, and is used to infer a parameter by using a model. The inference data may be data from the base station, the CU, the CU-CP, the CU-UP, the DU, the RU, the UE, and/or another entity. The inferred parameter may be regarded as policy information and sent to the action subject. The inferred parameter may be sent to the base station, the CU, the CU-CP, the CU-UP, the DU, the RU, the UE, or the like, to perform the policy configuration or the policy adjustment. AI models used for inference of different parameters may be the same or different. This is not limited. In the following descriptions in Embodiment 1 to Embodiment 4, it is assumed that the inference data is from the coverage station and/or the capacity station, the inferred parameter is an energy saving policy, and the energy saving policy is sent to the coverage station and/or the capacity station.

It may be understood that, in embodiments of this application, the AI device or the base station may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application are necessarily performed.

In embodiments of this application, unless otherwise specified or a logical conflict occurs, terms and/or descriptions in different embodiments are consistent and may be mutually referenced, and technical features in different embodiments may be combined to form a new embodiment based on an internal logical relationship.

### Embodiment 1

Embodiment 1 of this application provides an energy saving method, including: An AI device obtains first data from a coverage station and/or a capacity station, and determines an energy saving policy based on the first data; and the AI device outputs the energy saving policy. Correspondingly, the coverage station and/or the capacity station output the first data; and the coverage station and the capacity station obtain the energy saving policy from the AI device, and perform an energy saving operation based on an indication of the energy saving policy. In a design, the capacity station and the coverage station may separately report the first data to the AI device, and the AI device may separately obtain the first data from the coverage station and the first data from the capacity station. The first data from the coverage station indicates related information of the coverage station, and the first data from the capacity station may indicate related information of the capacity station. Alternatively, the coverage station may obtain related information of the capacity station, where the information may be reported by the capacity station to the coverage station, or may be obtained by the coverage station in another manner such as measurement. This is not limited. The coverage station reports the first data to the AI device, where the first data may indicate related information of the coverage station and related information of the capacity station. Alternatively, the capacity station may obtain related information of the coverage station, and the capacity station reports the first data to the AI device, where the first data may indicate both related information of the coverage station and related information of the capacity station. For the first data, refer to the following description. Similarly, the AI device may separately send the energy saving policy to the coverage station and the capacity station. Alternatively, the AI device sends the energy saving policy to one of the coverage station and the capacity station, the station forwards the energy saving policy to the other station, and so on.

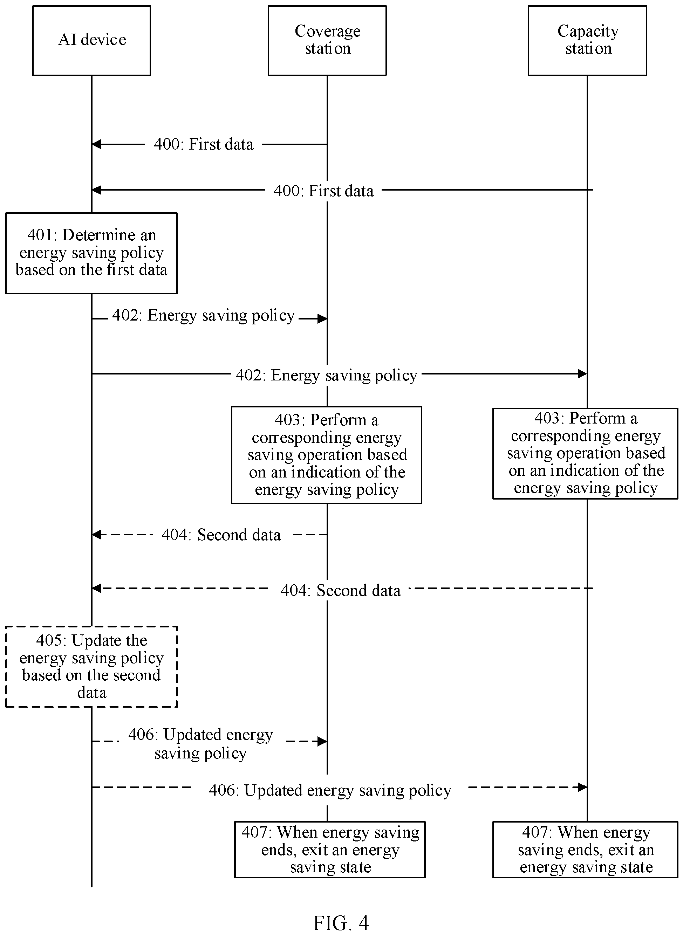

As shown in FIG. 4, a process of a cell energy saving method is provided, including:
Step 400: An AI device receives first data from a coverage station and a capacity station.

The first data is input data needed by the AI device to infer an energy saving policy. The first data may be directly used as the input data for the inference function, or may undergo processing, such as an operation, of the AI device before being used as the input data for the inference function. This is not limited. The first data may also be referred to as AI data, reported data, measurement data, or the like. A name of the data is not limited. The AI device is a device that performs an AI inference and determines the energy saving policy. The AI device may also be referred to as a remote intelligent communication apparatus, a wireless intelligent controller, an AI node, or the like. This is not limited.

In a design, the AI device may send query information to the coverage station and the capacity station, where the query information is used to request the coverage station or the capacity station to report the first data. For example, the AI device may periodically send the query information to the coverage station and the capacity station, or when a specific condition is satisfied, for example, the condition may be preset, the AI device sends the query information to the coverage station and the capacity station, and so on. Upon receiving the query information, the coverage station and the capacity station send a response information to the AI device, where the response information indicates at least the first data. The response information is in response to the query information. The query information may also be referred to as request information, trigger information, or another name. This is not limited.

It should be noted that this embodiment of this application is described by using an example in which both the coverage station and the capacity station directly communicate with the AI device, which is not intended to limit this embodiment of this application. For example, the coverage station may directly communicate with the AI device. Forwarding by the coverage station is needed in interaction between the capacity station and the AI device. For example, the coverage station may forward query information to the capacity station when receiving the query information from the AI device. Similarly, the capacity station may send a response information of the query information to the coverage station, the coverage station forwards the response information to the AI device, and so on. Alternatively, the capacity station may directly communicate with the AI device, and forwarding by the capacity station is needed in communication between the coverage station and the AI device. For subsequent interaction between the coverage station or the capacity station and the AI device, refer to the foregoing description, and details are not provided in the following description.

In a possible implementation, the query information indicates at least one of the following:

AI inference service type supported by the AI device, for example, load prediction and energy saving policy inference.

Time information of the energy saving policy sent by the AI device. The time information of the energy saving policy may include time information of inferring the energy saving policy by the AI device, and/or time information of outputting the energy saving policy by the AI device. For example, the AI device infers the energy saving policy every half an hour, and outputs the inferred energy saving policy every half an hour. In this case, the time information of inferring the energy saving policy and outputting the energy saving policy by the AI device may include a periodicity of half an hour.

Output information after the AI device completes inference, that is, information included in the energy saving policy output by the AI device. For information included in the energy saving policy, refer to descriptions in step 401.

Or input information required by an AI inference service, where the information may include first data that the coverage station and/or the capacity station needs to provide, and the like. For the first data, refer to the following description.

In a possible implementation, the first data reported by the coverage station and the capacity station at least indicates at least one of the following:
Operating parameter of the coverage station or the capacity station. For example, a basic operating parameter of the coverage station or the capacity station may include an antenna height, longitude and latitude, an azimuth, a cell frequency, a cell relationship, and/or the like. For example, the cell relationship may indicate an interconnecting relationship between cells, for example, a CU to which each DU belongs, or BBUs to which different stations belong.

Networking data of the coverage station or the capacity station, for example, whether a single carrier is used, whether a plurality of carriers are used, a quantity of supported carriers, a station type (for example, indicating whether a station is a capacity station or a coverage station), whether a station is a coverage station, and/or whether a station is a capacity station. The networking data may also be referred to as networking information.

Scenario information in which the coverage station or the capacity station is, for example, a scenario such as a high-rise building, a high-speed railway, or a subway.

Cell information of the coverage station or the capacity station, for example, a quantity of cells, cell load, traffic change, UE connection and handover information, a service type of each cell, and/or load corresponding to each service type.

Hardware resource information of the coverage station or the capacity station, for example, a hardware resource utilization rate and/or a remaining available hardware resource of the coverage station or the capacity station.

Operator policy of the coverage station or the capacity station, for example, whether the coverage station or the capacity station allows for energy saving.

Air interface resources of the coverage station or the capacity station. For example, at least one of the following may be included:
Occupied proportion of control channel elements (control channel elements, CCEs) of a physical downlink control channel (physical downlink control channel, PDCCH) in a cell. For example, the occupied proportion indicates a ratio of CCEs of a PDCCH used currently or in a time period to total available CCEs of the PDCCH. For example, the occupied proportion of the CCEs is 50%.

Uplink-downlink configuration of a cell. For example, the uplink-downlink configuration is 1:1, 1:2, or another value.

Occupied proportion of air interface resources by sounding reference signals (sounding reference signals, SRSs) in a cell, or the like. For example, the occupied proportion of air interface resources by SRSs in a cell may refer to a ratio of air interface resources occupied by SRSs in a cell currently or in a time period to total uplink air interface resources in the cell. For example, the proportion of the air interface resources occupied by the SRSs in the cell accounts for 1%, 0.5%, or the like of total air interface resources in the cell.

Occupied proportion of air interface resources by physical uplink control channels (physical uplink control channels, PUCCHs) in a cell and/or a quantity of resource blocks (resource blocks, RBs) occupied. Optionally, quantities of RBs occupied by PUCCHs in different formats (formats) may be reported for different PUCCH formats. For example, the occupied proportion of air interface resources by PUCCHs may be a ratio of a quantity of RBs occupied by PUCCHs in a cell currently or in a time period to total uplink air interface resources (a quantity of RBs) in the cell. For a specific PUCCH format, the occupied proportion of air interface resources by PUCCHs in the format may be a ratio of a quantity of RBs occupied by the PUCCHs in the format in a cell in the cell currently or in a time period to total uplink air interface resources (a quantity of RBs). For example, the occupied proportion of air interface resources by PUCCH format 1 in a cell is 20%. For example, an air interface resource occupied by PUCCH format 1 in the cell is two RBs.

Or occupied proportion of physical random access channel (physical random access channel, PRACH) preambles in a cell or for each SSB beam. For example, for a beam, an occupied proportion of PRACH preambles for the beam may indicate a ratio of a quantity of PRACH preambles corresponding to the beam to a total quantity of available PRACH preambles in a cell. For a beam, an occupied proportion of PRACH preambles for the beam may indicate a ratio of a quantity of PRACH preamble root sequences corresponding to the beam to a total quantity of available PRACH preamble root sequences in a cell.

Transport network layer (transport network layer, TNL) resources of the coverage station or the capacity station, which may include:
Provided uplink and/or downlink TNLs of each cell, and/or a percentage of available uplink and/or downlink TNLs of each cell, or the like. The percentage of available uplink TNL resources of a cell may refer to a ratio of used uplink TNL resources of the cell to first total available TNL resources, where the first total available TNL resources may refer to all available uplink TNL resources, or a sum of all available uplink TNL resources and downlink TNL resources. The percentage of available downlink TNLs of a cell may refer to a ratio of used downlink TNL resources of the cell to second total available TNL resources, where the second total available TNL resources may refer to all available downlink TNL resources, or a sum of all available uplink TNL resources and downlink TNL resources.

Cell capacity information of the coverage station or the capacity station, which may include at least one of the following:

Capacity level of a cell and/or capacity level of each SSB beam. For example, the capacity level of a cell or an SSB may be current load, for example, low load or high load, of the cell or the SSB.

Quantity of activated UEs in each cell.

Quantity of RRC connections in each cell.

Slice capacity information of the coverage station or the capacity station.

Maximum capacity and/or available proportion of each network slice. For example, the maximum capacity of each network slice may be considered as a throughput of each network slice. The available proportion of each network slice may be considered as a ratio of a remaining throughput to a maximum throughput of each network slice, where the remaining throughput is equal to a difference between the maximum throughput and a currently used throughput. In other words, the available proportion of each network slice=(maximum throughput of the slice - current throughput of the slice)/maximum throughput of the slice.

Or information about UE in the coverage station or the capacity station. The information about UE specifically reported by the coverage station or the capacity station may be indicated by the AI device, or determined by the coverage station or the capacity station. Alternatively, the information about UE reported by the coverage station or the capacity station is information about UE that satisfies a condition, or is specified in a protocol, or the like. This is not limited. The information about UE may include at least one of the following:
At least one of location information (for example, a moving path) of the UE predicted by the coverage station or the capacity station, reference signal received power (reference signal received power, RSRP) information (for example, a change pattern), reference signal received quality (reference signal received quality, RSRQ) information (for example, a change pattern), or the like.

At least one of past location information (for example, a past movement path and/or past geographic coordinates) of the UE stored by the coverage station or the capacity station, geographic coordinates of the UE at a current moment, a current movement direction of the UE, a current movement speed of the UE, a past movement direction of the UE, a past movement speed of the UE, or the like.

Alternatively, in another design, the coverage station and the capacity station may actively report the first data to the AI device. For example, the coverage station and the capacity station may periodically report the first data to the AI device, or the coverage station and the capacity station may report the first data to the AI device when a specific condition is satisfied, where the condition is, for example, a preset condition. This is not limited.

Optionally, in addition to reporting the first data to the AI device, the coverage station and the capacity station may further report at least one of the following to the AI device: service information of interest to the coverage station or the capacity station, time information of interest to the coverage station or the capacity station, or condition information of interest to the coverage station or the capacity station. A service of interest may refer to a service supported or run by the coverage station or the capacity station in a time period. In a design, the coverage station or the capacity station may report, to the AI device, at least one of related information of the service of interest, for example, a type of the service, time information for supporting or running the service of interest, or a trigger condition of the service of interest. The AI device predicts an energy saving policy or the like of the foregoing service of interest in the time period.

Step 401: The AI device determines an energy saving policy based on the first data.

In a design, the AI device may infer the energy saving policy by using an AI model. For the AI model, refer to descriptions in FIG. 3a or FIG. 3b. In a design, the AI device may input the first data into the AI model, the AI model performs an AI inference on the first data, and an output of the AI model is the energy saving policy. This process may be considered as one AI inference. Alternatively, in another design, the AI device may predict at least one of network load, network coverage, a network service type, or the like based on the first data; and the AI device may determine the energy saving policy based on at least one of the predicted network load, the predicted network coverage, the predicted network service type, or the like. This process may be considered as two AI inferences. For example, the AI device may input the first data into AI model A, AI model A performs an AI inference on the first data, and an output of AI model A is at least one of the predicted network load, the predicted network coverage, the predicted network service type, or the like. The AI device may input at least one of the predicted network load, the predicted network coverage, the predicted network service type, or the like into AI model B, and an output of AI model B is the energy saving policy. When the AI device determines the energy saving policy, a quantity of AI inferences is not limited.

Step 402: The AI device sends the energy saving policy to the coverage station and the capacity station.

In a possible design, the energy saving policy indicates at least one of the following:
1. Scenario type tag of the capacity station or a cell of the capacity station. The scenario type tag may be considered as indication information. The indication information indicates energy saving first or capacity first in the capacity station or the cell of the capacity station. The scenario type tag may also be referred to as indication information or scenario type information. This is not limited. For example, energy saving first means that the energy saving policy is preferentially executed by the capacity station or the cell of the capacity station, and capacity first means that a capacity of the capacity station or the cell of the capacity station is preferentially ensured. For example, when the capacity is put first, the capacity station may preferentially ensure throughput of the capacity station or the cell of the capacity station, for example, keep the throughput greater than a specific threshold. The energy saving policy is executed based on a guaranteed throughput. When the throughput cannot be ensured, for example, when the throughput is less than or equal to a specific threshold, execution of the energy saving policy is canceled. Optionally, the throughput threshold may be configured by a network device. Different throughput thresholds may be configured according to different scenarios, and the throughput thresholds may be modified according to different scenarios.
2. Energy saving operation performed by the capacity station or the cell of the capacity station. In some embodiments of this application, an operation performed by a cell of the capacity station may refer to an operation performed by the capacity station for the cell or an operation related to the cell performed by the capacity station. Optionally, the energy saving operation performed by the capacity station or the cell of the capacity station includes at least one of the following: cell switch-off, symbol switch-off, slot switch-off, subframe switch-off, port switch-off, carrier switch-off, channel switch-off, transmit power adjustment, or the like. It may be understood that switch-off or turn-off may be understood as no transmission. The energy saving operation performed by the capacity station or the cell of the capacity station may specifically include any one of the foregoing energy saving operations, or may be a combination of the foregoing energy saving operations of a plurality of types. This is not limited. The cell switch-off is cell-level switch-off, and specifically, at least one cell of the capacity station may be switched off. It may be understood that, when all cells of the capacity stations are switched off, it may be considered that the capacity station is switched off. The symbol switch-off, slot switch-off, and subframe switch-off may be considered as time-domain-level switch-off, and specifically, communication of at least one symbol, at least one slot, or at least one subframe in the capacity station may be switched off. The at least one symbol, the at least one slot, or the at least one subframe that is switched off may be consecutive or inconsecutive in time domain. This is not limited. One cell includes at least one port. The port may be a radio frequency port, a baseband port, and/or the like, and the port may be a transmit port or a receive port. The port switch-off may include switching off at least one port in at least one cell of the capacity station. Similarly, one cell may include at least one carrier, and the carrier may be an uplink carrier or a downlink carrier. The carrier switch-off may refer to switching off a carrier of at least one cell of the capacity station. The transmit power adjustment may refer to adjusting transmit power of at least one cell of the capacity station, for example, reducing transmit power of some cells of the capacity station. The channel switch-off may refer to switching off transmission of a specific channel in the capacity station, for example, a physical downlink shared channel (physical downlink shared channel, PDSCH) and/or a physical uplink shared channel (physical uplink shared channel, PUSCH). In addition to cell-level switch-off, switch-off of other levels, such as time-domain-level switch-off, port switch-off, carrier switch-off, and channel switch-off, is introduced in the foregoing energy saving policy to improve energy saving efficiency.
3. Time information of the energy saving operation performed by the capacity station or the cell of the capacity station. For example, the time information of the energy saving operation performed by the capacity station or the cell of the capacity station may be specifically: a start time, an end time, and/or the like of the energy saving operation performed by the capacity station or the cell of the capacity station. It may be understood that the start time and the end time may be explicitly indicated, implicitly indicated, or the like. For example, in a possible implementation, the AI device may indicate the start time and duration of the energy saving operation to the capacity station. The capacity station may infer, based on the start time and the duration of the energy saving operation, the end time for performing the energy saving operation. In the foregoing design, the capacity station or the cell of the capacity station may automatically switch on or off the energy saving policy without activating or deactivating by the coverage station, thereby simplifying the design and reducing signaling overheads.
4. Corresponding operation of the coverage station performed during execution of the energy saving operation by the capacity station or the cell of the capacity station. For example, in a design, the AI device may indicate to the coverage station whether the coverage station performs power adjustment, beam encryption, and/or the like, during execution of the energy saving operation by the capacity station or the cell of the capacity station, to ensure coverage.
5. Time information of the corresponding operation performed by the coverage station. For example, the time information of the corresponding operation performed by the coverage station may include a start time, an end time, and/or the like. It is similar to the foregoing descriptions that the AI device may explicitly indicate the start time and/or the end time, or implicitly indicate the start time and the end time, or the like.
6. Or condition that the capacity station or the cell of the capacity station needs to satisfy to execute the energy saving policy.

Optionally, when the energy saving policy indicates the fourth item and the fifth item, it may also be described as follows: The energy saving policy indicates an operation of the coverage station and time information of the operation performed by the coverage station. A time length corresponding to the time information may be greater than, equal to, or less than a time length of the energy saving operation performed by the capacity station or the cell of the capacity station. This is not limited. In this case, the capacity station may not need to sense the time information of the energy saving operation performed by the coverage station or the cell of the coverage station.

It may be understood that, in the foregoing descriptions, an example in which the AI device configures one energy saving policy for the capacity station is used for description. Actually, the AI device may configure at least one energy saving policy for the capacity station. Conditions corresponding to each energy saving policy may be different, and each energy saving policy may include at least one of the foregoing first to fifth items. When the capacity station satisfies different conditions, the capacity station may select an energy saving policy corresponding to the condition, and then execute the selected energy saving policy.

Optionally, in addition to sending the energy saving policy to the coverage station or the capacity station, the AI device may further send, to the coverage station or the capacity station, at least one of predicted network load, predicted network coverage, or a predicted network service type, a confidence level of AI prediction, and the like. Alternatively, the energy saving policy may be described as that, in addition to at least one of the foregoing first to sixth items, the energy saving policy may further include at least one of network load predicted by the AI device, network coverage predicted by the AI device, a network service type predicted by the AI device, or a confidence level of AI prediction.

It should be noted that, in the foregoing descriptions, the energy saving policies sent by the AI device to the coverage station and the capacity station may be the same or different. It can be learned from the foregoing descriptions of the energy saving policy that the first item, the second item, the third item, and the sixth item in the energy saving policy are related to the capacity station, and the fourth item and the fifth item are related to the coverage station. Therefore, in a design, the AI device may send at least one of the first item, the second item, the third item, and the sixth item in the energy saving policy to the capacity station. The AI device sends at least one of the fourth item and the fifth item in the energy saving policy to the coverage station, and so on.

Step 403: The coverage station and the capacity station perform a corresponding energy saving operation based on an indication of the energy saving policy.

It should be noted that the energy saving policy of the capacity station may relate to a process such as cell switch-off, symbol switch-off, slot switch-off, subframe switch-off, port switch-off, channel switch-off, or carrier switch-off. If the execution of the energy saving policy affects access of UE to the capacity station, the capacity station may further hand over the affected UE to a neighboring cell that is not switched off.

Optionally, step 404: The AI device receives second data from the coverage station and the capacity station.

In a design, content included in the second data is similar to that included in the first data. For descriptions of the second data, refer to the description of the first data. A difference lies in that the second data is related data of the coverage station and the capacity station during execution of the energy saving policy by the coverage station and the capacity station. Alternatively, in another design, the second data may refer to a network status of the coverage station or the capacity station during execution of the energy saving policy by the coverage station and the capacity station, where the network status may include network load, network coverage, a UE mobility state, or the like of the coverage station and the capacity station. Alternatively, the AI device may send the predicted network load and network status to the coverage station and the capacity station. The coverage station or the capacity station may measure network load and network coverage of the coverage station or the capacity station during running the energy saving policy. Then, the coverage station or the capacity station predicts network load and network coverage, compares the predicted network load and network coverage with the actually measured network load and network coverage, and reports variations of the network load and network coverage to the AI device. In other words, the second data may refer to variations of the network load and network coverage, and the like.

Optionally, step 405: The AI device updates the energy saving policy based on the second data.

For example, when the second data includes the network load and network coverage during running the energy saving policy by the coverage station or the capacity station, the AI device may compare the predicted network load and network coverage with the actually reported network load and network coverage. If differences between the predicted network load and network coverage and the actually reported network load and network coverage are less than a threshold, the AI device may consider that accuracy of the current energy saving policy is high, and the AI model does not need to be updated. On the contrary, if the differences between the predicted network load and network coverage and the actually reported network load and network coverage are greater than or equal to the threshold, the AI device considers that the accuracy of the current energy saving policy is low, and the AI model needs to be updated. Alternatively, when the second data includes the variations of the network load and network coverage, the AI device may determine, by using the variations, whether to update the AI model. In this way, a processing process of the AI device is simpler.

In a design, the AI device may update the AI model based on the second data, and determine an updated energy saving policy based on the updated AI model. Alternatively, in another design, the AI device may perform an AI inference by using the second data, to determine an updated energy saving policy, and so on. In other words, the second data is used as an input and is input to the AI model, and an output of the AI model is the updated energy saving policy. Alternatively, in another design, the AI device may update both the energy saving policy and the AI model. Updating an AI model may also be referred to as enhancing an AI model or the like.

Optionally, step 406: The AI device sends the updated energy saving policy to the coverage station and the capacity station.

In a design, the AI device may separately send the updated energy saving policy to the coverage station and the capacity station. Alternatively, in another design, the AI device updates, based on the reported second data, the energy saving policy related to the capacity station. The AI device may send the updated energy saving policy to the capacity station, and whether the AI device sends the updated energy saving policy to the coverage station is not limited. Alternatively, if the AI device updates, based on the reported second data, the energy saving policy related to the coverage station, the AI device may send the updated energy saving policy to the coverage station, and whether the AI device sends the updated energy saving policy to the capacity station is not limited.

In the foregoing steps 404 to 406, the AI device may use, as an input for AI enhancement learning of the AI device, the network load and network coverage of the coverage station or the capacity station during running the energy saving policy, to update the energy saving policy, and optimize accuracy of inference of the energy saving policy by using the AI model.

Step 407: When energy saving ends, the capacity station and the coverage station exit an energy saving state.

In a design, the coverage station and the capacity station may consider that the energy saving ends at a first time, and exit the energy saving state. For example, the first time may be indicated to the capacity station and the coverage station by using an energy saving policy.

It should be noted that, during execution of the energy saving policy by the coverage station or the capacity station, the coverage station or the capacity station may modify the energy saving policy. For example, if the AI device predicts that load of the capacity station continuously decreases to below a threshold within a time period t0 to t1, within the time period t0 to t1, the AI device considers that the capacity station needs to execute an energy saving policy. The AI device indicates the predicted load of the capacity station in the time period t0-t1 and the energy saving policy to the capacity station. The capacity station executes the energy saving policy in the time period t0-t1. However, in this time period, if the load of the capacity station does not continuously decrease as predicted, but continuously increases, in this case, the capacity station may modify the energy saving policy to ensure service performance, and notify the AI device and the coverage station, or the capacity station may report actual load to the AI device, and the AI device instructs the capacity station to implement another energy saving policy, and so on.

During execution of the energy saving policy by the coverage station or the capacity station, the coverage station or the capacity station may exit the energy saving state. For example, the coverage station or the capacity station may determine whether the current energy saving policy is suitable, and when the current energy saving policy is no longer suitable, the coverage station or the capacity station may exit the energy saving policy. For example, when the network load of the coverage station and the capacity station exceeds a threshold of the current energy saving policy, the coverage station and the capacity station may exit the energy saving state, and notify the AI device, another neighboring station, and the like. The threshold of the energy saving policy may be predefined or indicated by the energy saving policy. This is not limited.

In the foregoing Embodiment 1, the AI technology is combined with the energy saving policy, to enable AI-based inference on the energy saving policy, and improve robustness of the energy saving policy.

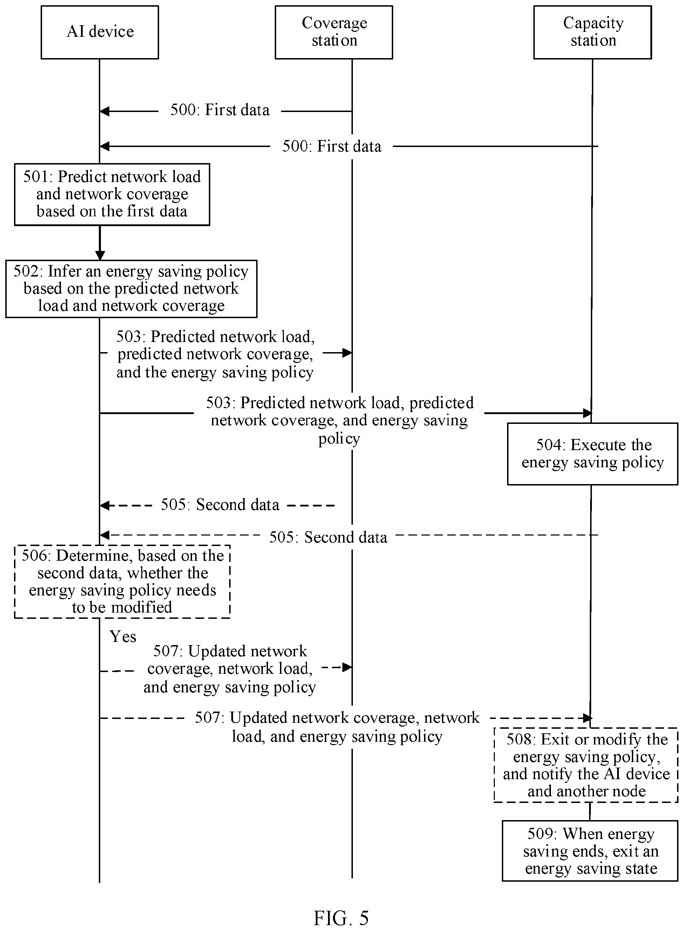

As shown in FIG. 5, a process of a specific example of Embodiment 1 is provided, including at least the following steps:
Step 500: An AI device receives first data from a coverage station and a capacity station.
Step 501: The AI device predicts network load and network coverage based on the first data.
Step 502: The AI device infers an energy saving policy based on the predicted network load and network coverage.
Step 503: The AI device sends the predicted network load, the predicted network coverage, and the inferred energy saving policy to the coverage station and the capacity station.
Step 504: The capacity station executes the energy saving policy.

It should be noted that, because the energy saving policy is mainly executed by the capacity station, the coverage station may cooperate with the capacity station to perform adjustment, for example, beam encryption and transmit power adjustment, to ensure coverage. Therefore, in the process shown in FIG. 5, an example in which the capacity station executes the energy saving policy is used for description.

Optionally, step 505: The capacity station and the coverage station send, to the AI device, a measured network status (that is, second data) during execution of the energy saving policy.

Optionally, step 506: The AI device determines, based on the second data, whether the energy saving policy needs to be modified. If the energy saving policy needs to be modified, the following step 507 is performed; otherwise, the energy saving policy is not updated.

Optionally, step 507: The AI device sends updated network load, updated network coverage, and an updated energy saving policy to the coverage station and the capacity station.

In a design, the AI device may predict network load and network coverage based on latest measurement data, that is, the second data, and the predicted network load and network coverage. The predicted network load and network coverage may be referred to as updated network load and updated network coverage. The AI device infers a new energy saving policy based on the updated network load and network coverage. The new energy saving policy inferred may be referred to as an updated energy saving policy.

Optionally, step 508: The coverage station or the capacity station exits or modifies the energy saving policy, and notifies the AI device and another station.

Step 509: When energy saving ends, the coverage station and the capacity station exit an energy saving state.

### Embodiment 2

Embodiment 2 of this application provides a cell energy saving method. A difference from the foregoing Embodiment 1 lies in that in Embodiment 1, the AI module is deployed in the AI device, while in Embodiment 2, the AI module is deployed in a coverage station, and the coverage station executes a process of an AI inference of an energy saving policy. The method may include: the coverage station obtains first data from a capacity station. The coverage station determines an energy saving policy based on the first data. The coverage station outputs the energy saving policy, and so on. Correspondingly, the capacity station outputs the first data. The capacity station obtains the energy saving policy from the coverage station, performs an energy saving operation based on an indication of the energy saving policy, and so on.

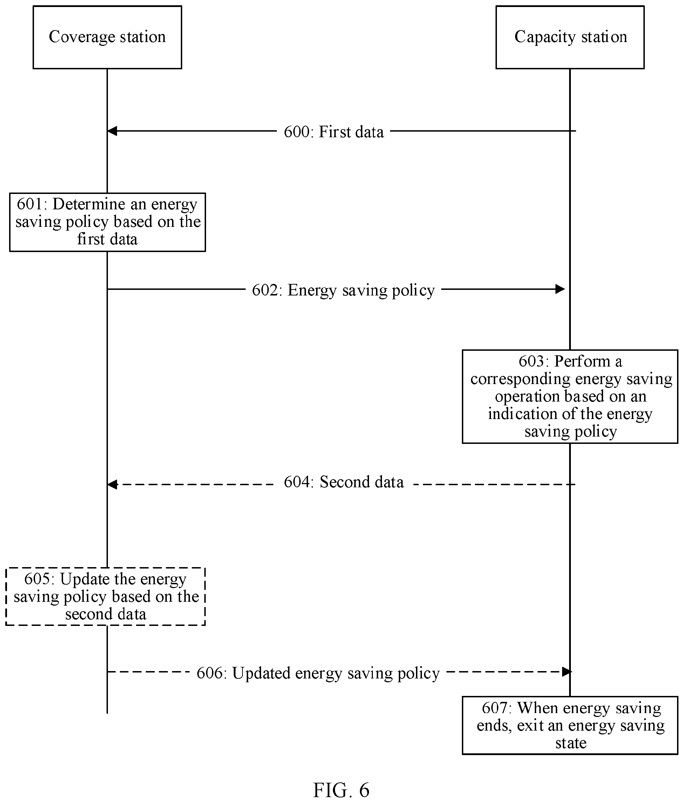

As shown in FIG. 6, a process of a cell energy saving method is provided, including at least the following steps:
Step 600: A coverage station receives first data from a capacity station.

Different from the foregoing Embodiment 1, because an AI module is deployed in the coverage station, the AI module may directly obtain measurement information related to the coverage station, that is, the first data, without transfer by using an external interface. The AI module still needs to obtain the measurement information, that is, the first data, from the capacity station over a related interface.

Step 601: The coverage station determines an energy saving policy based on the first data.

In a design, the coverage station may include an AI module, and the AI module may include at least one of the data source, the model training host, or the model inference host in FIG. 3a. Alternatively, the AI model may include the second AI module in FIG. 3c or FIG. 3d, or the like.

For a process in which the coverage station performs an AI inference by using the first data to obtain the energy saving policy, refer to descriptions in Embodiment 1. For example, the coverage station may perform an AI inference by using the first data, to obtain the energy saving policy. For example, the coverage station may predict network load and network coverage based on the first data; and the coverage station determines the energy saving policy based on the predicted network load and network coverage. This process may be considered as a process of two AI inferences.

Step 602: The coverage station sends the energy saving policy to the capacity station.

In a design, an interface allowing for direct communication exists between the coverage station and the capacity station, and the interface may be an X2 interface, an Xn interface, or another interface. The coverage station may send the energy saving policy to the capacity station over the foregoing interface.

In another design, no interface allowing for direct communication exists between the coverage station and the capacity station. The coverage station may send a part or all of the energy saving policy to the capacity station by using a core network device. For example, the coverage station may send the energy saving policy to the core network device over an S1 interface, an NG interface, or another interface, and the core network device forwards the energy saving policy to the capacity station.

All processes related to communication between the coverage station and the capacity station in embodiments of this application may be included in the foregoing descriptions. For the description, refer to the foregoing text, and no additional description is provided in other parts.

It can be learned from the descriptions in the foregoing Embodiment 1 that the first item, the second item, the third item, and the sixth item in the energy saving policy are related to the capacity station, and the fourth item and the fifth item are related to the coverage station. In a design, the coverage station may indicate, to the capacity station, at least one of the first item, the second item, the third item, and the sixth item in the energy saving policy in the foregoing Embodiment 1. In other words, the energy saving policy sent by the coverage station to the capacity station may indicate at least one of the following: a scenario type tag of the capacity station or a cell of the capacity station; an energy saving operation performed by the capacity station or the cell of the capacity station; time information of the energy saving operation performed by the capacity station or the cell of the capacity station; or a condition that the capacity station or the cell of the capacity station needs to satisfy to execute the energy saving policy. Whether the coverage station indicates the fourth item and the fifth item in the energy saving policy to the capacity station is not limited. For example, the coverage station may indicate the fourth item and the fifth item in the energy saving policy to the capacity station. In other words, the energy saving policy may further indicate at least one of the following: a corresponding operation of the coverage station performed during execution of the energy saving operation by the capacity station or the cell of the capacity station, or time information of the corresponding operation performed by the coverage station.

Step 603: The capacity station performs an energy saving operation based on an indication of the energy saving policy.

Optionally, step 604: The coverage station receives second data sent by the capacity station.

In a design, the second data is similar to the first data in the foregoing step 600, and a difference lies in that the second data is related information acquired by the capacity station during execution of the energy saving policy. Alternatively, in another design, the second data may be a network status of the capacity station during execution of the energy saving policy by the capacity station, where the network status may include at least one of network load, network coverage, or a UE mobility state during execution of the energy saving policy by the capacity station, and so on. Alternatively, the network status may include a variation of actual network load from predicted network load, a variation of actual network coverage from predicted network coverage, and/or the like during execution of the energy saving policy by the capacity station.

Optionally, step 605: The coverage station updates the energy saving policy based on the second data.

Similar to the foregoing Embodiment 1, the coverage station may determine, based on the second data, whether to update the energy saving policy, and so on. If the energy saving policy needs to be updated, the following step 606 is performed; otherwise, the energy saving policy is not updated.

Optionally, step 606: The coverage station sends an updated energy saving policy to the capacity station.

Step 607: When energy saving ends, the capacity station exits an energy saving state.

It should be noted that, during execution of the energy saving policy by the capacity station, the capacity station may exit the energy saving state or modify the energy saving policy, and so on.

In the solution of the foregoing Embodiment 2, the coverage station predicts network load and/or network coverage based on AI, and infers an energy saving policy based on a prediction result, to improve robustness of the energy saving policy. In addition, enhancement learning is performed on the AI module by using a real-time network status of the capacity station, to improve prediction and inference accuracy.

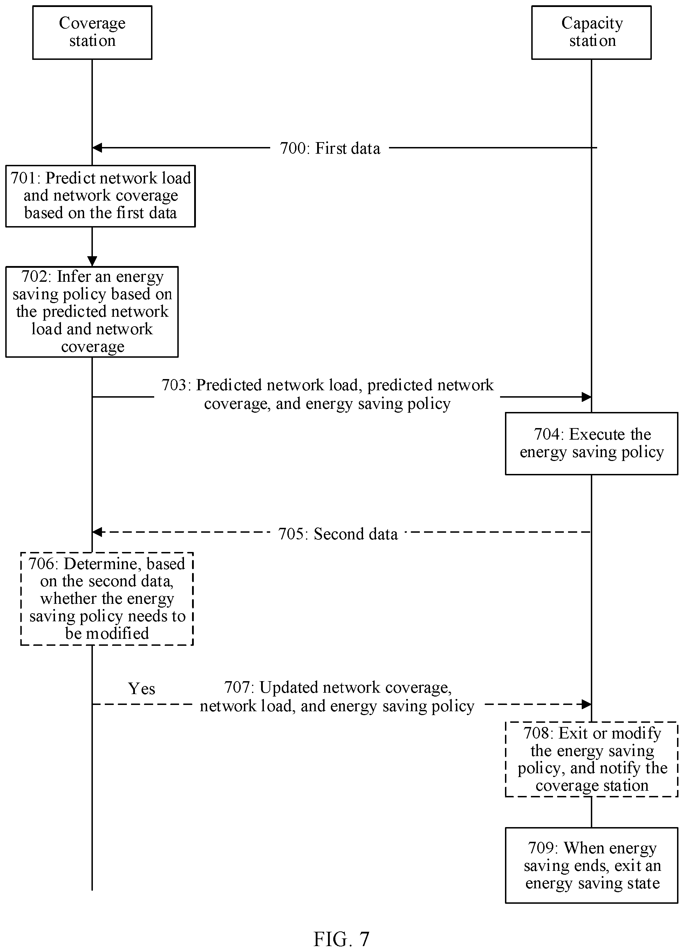

As shown in FIG. 7, a specific example of Embodiment 2 is provided, including at least the following steps:

Step 700: A coverage station receives first data from a capacity station.

Step 701: The coverage station predicts network load and network coverage based on the first data.

Step 702: The coverage station infers an energy saving policy based on the predicted network load and network coverage.

Step 703: The coverage station sends the predicted network load, predicted network coverage, and the inferred energy saving policy to the capacity station.

Step 704: The capacity station performs an energy saving operation based on an indication of the energy saving policy.

Optionally, step 705: The capacity station sends second data to the coverage station.

Optionally, step 706: The coverage station determines, based on latest measurement data, that is, the second data, whether the energy saving policy needs to be modified. Optionally, when the energy saving policy needs to be modified, the coverage station may further modify an AI model used for an AI inference. The process of modifying an AI model may be referred to as enhancing an AI model.

Optionally, step 707: The coverage station sends updated network load, updated network coverage, and an updated energy saving policy to the capacity station.

Optionally, step 708: The coverage station exits an energy saving state in advance, or modifies the energy saving policy, and notifies the coverage station.

Step 709: When energy saving ends, the capacity station exits the energy saving state.

According to the foregoing solution, an AI module is introduced in the coverage station, and the coverage station predicts network statuses of a present cell and a neighboring cell of the capacity station, and updates the energy saving policy based on a difference between the predicted network status and an actual network status, thereby improving accuracy of the energy saving policy.

### Embodiment 3

Embodiment 3 provides an energy saving method. A difference between the method and the foregoing Embodiment 1 or Embodiment 2 lies in that an AI module is in a capacity station, and the capacity station performs an AI inference for an energy saving policy. For example, the method may include: the capacity station obtains first data from the coverage station; the capacity station determines an energy saving policy based on the first data; and the capacity station outputs the energy saving policy. Correspondingly, the coverage station outputs the first data; and the coverage station obtains the energy saving policy from the capacity station, and executes a relevant energy saving operation based on an indication of the energy saving policy.

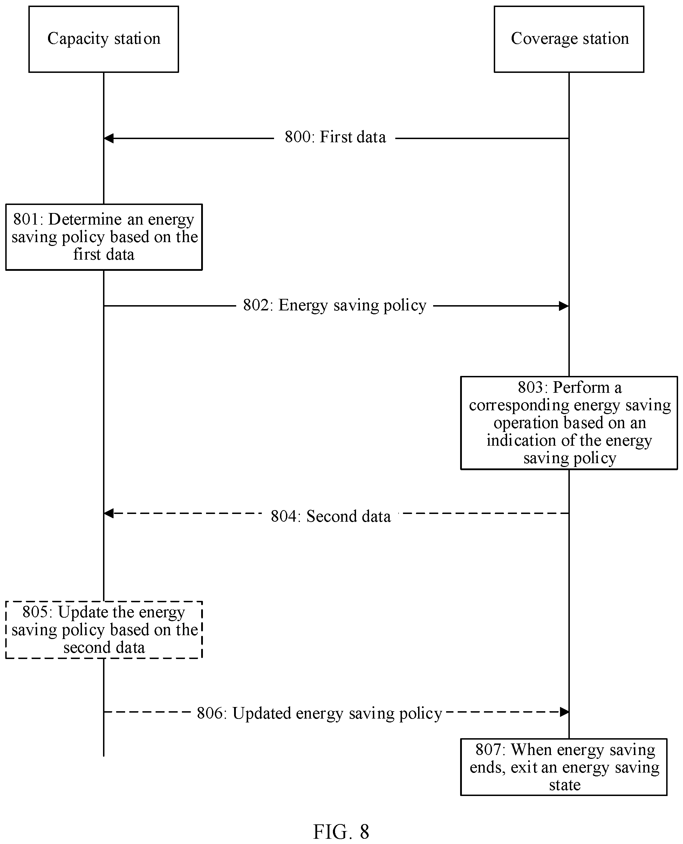

As shown in FIG. 8, a process of an energy saving method is provided, including at least the following steps:
Step 800: A capacity station receives first data from a coverage station.

Different from the foregoing Embodiment 1 or Embodiment 2, in Embodiment 3, the AI module is in the capacity station. Therefore, the AI module may directly obtain measurement information (that is, the first data) of the capacity station without transfer over an external interface. The AI module still needs to obtain related measurement information of the coverage station, that is, the first data, over a related interface.

Step 801: The capacity station determines an energy saving policy based on the first data.

In a possible design, an AI module is deployed in the capacity station, and the AI module may include at least one of the data source, the model training host, the model inference host, or the like in FIG. 3a. Alternatively, the AI module may be the second AI module in FIG. 3c or FIG. 3d. The AI module includes an AI model, and the AI module may infer the energy saving policy by using the AI model. For example, the AI module may input the first data to the AI model, and an output of the AI model is the energy saving policy. For a process in which the capacity station performs an AI inference by using the first data to obtain the energy saving policy, refer to descriptions in Embodiment 1.

Step 802: The capacity station sends the energy saving policy to the coverage station.

It can be learned from the descriptions in the foregoing Embodiment 1 that the first item, the second item, the third item, and the sixth item in the energy saving policy are related to the capacity station, and the fourth item and the fifth item are related to the coverage station. In a design, the capacity station may indicate, to the coverage station, at least one of the fourth item and the fifth item in the energy saving policy in the foregoing Embodiment 1. In other words, the energy saving policy sent by the capacity station to the coverage station indicates at least one of the following: a corresponding operation of the coverage station performed during execution of the energy saving operation corresponding to the energy saving policy by the capacity station or a cell of the capacity station, or time information of the energy saving operation performed by the coverage station. Whether the capacity station indicates the first item, the second item, the third item, and the sixth item in the energy saving policy to the coverage station is not limited. For example, the capacity station may indicate, to the capacity station, at least one of the first item, the second item, the third item, and the sixth item in the energy saving policy. In other words, the energy saving policy further indicates at least one of the following: a scenario type tag of the capacity station or the cell of the capacity station; an energy saving operation performed by the capacity station or the cell of the capacity station; time information of the energy saving operation performed by the capacity station or the cell of the capacity station; a condition that the capacity station or the cell of the capacity station needs to satisfy to perform the energy saving operation, or the like.

Step 803: The capacity station executes the energy saving policy.

Optionally, step 804: The capacity station receives second data reported by the coverage station.

In a design, the second data is similar to the first data, and a difference lies in that the second data is related data of the coverage station during execution of the energy saving policy. Alternatively, in another design, the second data is a network status of the coverage station during execution of the energy saving policy by the coverage station, and the network status may include network load and/or network capacity or the like of the coverage station during execution of the energy saving policy, or may include a variation of actual network load from predicted network load, may include a variation of actual network capacity from predicted network capacity, and/or the like.

Optionally, step 805: The capacity station updates the energy saving policy based on the second data.

Optionally, step 806: The capacity station sends an updated energy saving policy to the coverage station.

Step 807: When energy saving ends, exit an energy saving state.

It should be noted that, during execution of the energy saving policy by the coverage station or the capacity station, the coverage station or the capacity station may exit the energy saving state or modify the energy saving policy, and so on.

According to the solution in the foregoing Embodiment 3, the network load and network coverage are predicted based on AI, and the energy saving policy is inferred based on a prediction result, to improve robustness of the energy saving policy. In addition, enhancement learning may be performed on the AI model based on actual load of a plurality of cells, to improve prediction and inference accuracy, thereby further improving energy saving efficiency.

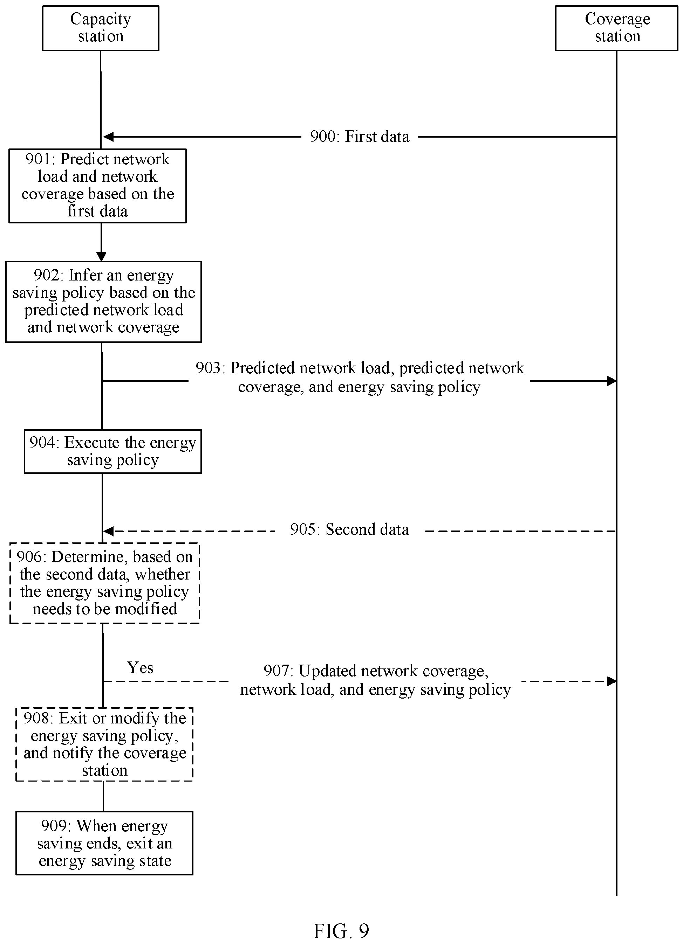

As shown in FIG. 9, a specific example of Embodiment 3 is provided, including at least the following steps:
Step 900: A capacity station receives first data from a coverage station.
Step 901: The capacity station predicts network load and network coverage based on the first data.
Step 902: The capacity station infers an energy saving policy based on the predicted network load, the predicted network coverage, and the like.
Step 903: The capacity station sends the predicted network load, the predicted network coverage, and the inferred energy saving policy to the coverage station.
Step 904: The capacity station and the coverage station perform an energy saving operation based on an indication of the energy saving policy.
Step 905: The capacity station receives second data sent by the coverage station.
Step 906: The capacity station determines, based on the second data, whether to modify the energy saving policy. If necessary, the following step 907 is performed; otherwise, the capacity station does not modify the energy saving policy. Optionally, when modifying the energy saving policy, the capacity station may further modify an AI model used for an AI inference.
Step 907: The capacity station sends updated network load, updated network coverage, and an updated energy saving policy to the coverage station.
Step 908: The capacity station exits an energy saving state in advance, or modifies the energy saving policy, and notifies the coverage station.
Step 909: When energy saving ends, the coverage station exits the energy saving state.

An AI module is added to the capacity station. The AI module predicts load of a present cell and a neighboring cell, and optimizes AI-based load prediction and the energy saving policy based on a difference between the predicted load and actual load of a plurality of cells including the neighboring cell, thereby further improving the energy saving accuracy.

### Embodiment 4

Embodiment 4 of this application further provides an energy saving method. The method includes: a CU and/or a DU reports, to an AI device, a BBU to which the CU and/or the DU belongs. When the AI device infers stations that need to be switched off for energy saving, the AI device preferentially switches off stations that belong to a same BBU. For example, the station may include a CU, a DU, and/or the like.

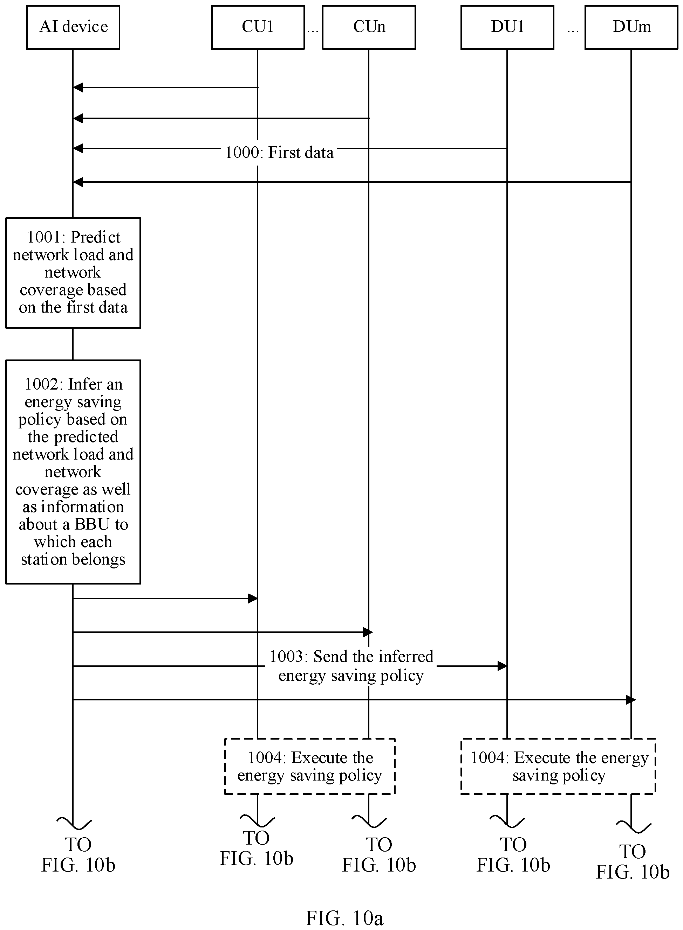

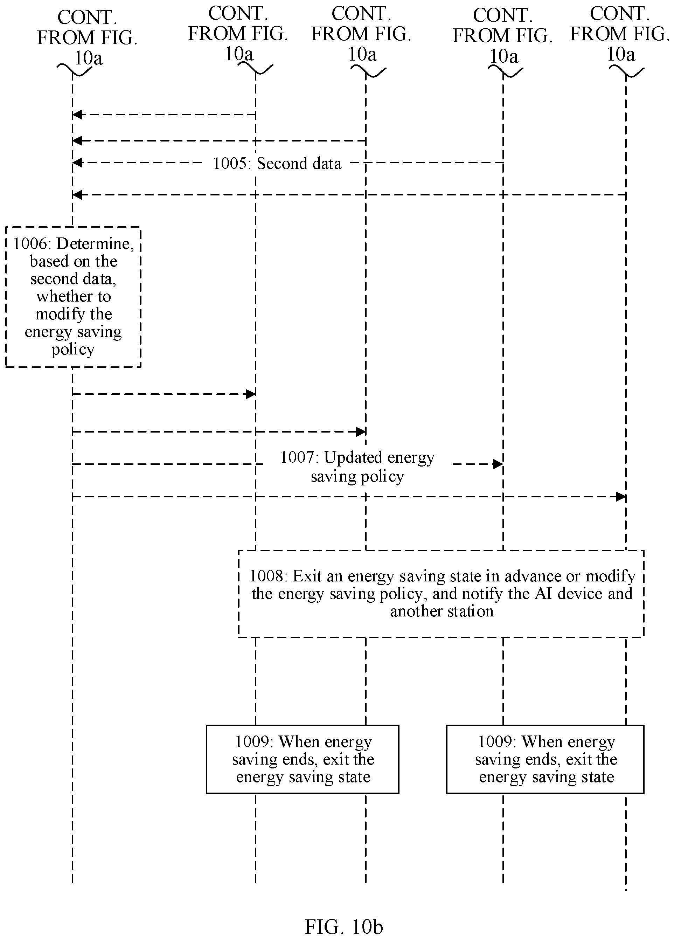

As shown in FIG. 10a and FIG. 10b, a process of an energy saving method is provided, including at least the following steps:
Step 1000: An AI device receives first data from a CU and/or a DU.

For the first data, refer to descriptions in the foregoing Embodiment 1. Optionally, the first data may further indicate information about a BBU to which the CU and/or the DU belongs.

Step 1001: The AI device predicts network load and network coverage based on the first data.

For a process of predicting the network load and the network coverage, refer to the foregoing Embodiment 1. In a design, the AI device may determine, based on the information about a BBU to which the CU and/or the DU belongs, a BBU to which each station belongs.

Step 1002: The AI device infers an energy saving policy based on the network load, the network coverage, and the information about a BBU to which each station belongs.

For a process of inferring the energy saving policy, refer to descriptions in the foregoing Embodiment 1. A difference lies in that, if it is considered to switch off stations for energy saving in the energy saving policy, stations of a same BBU may be preferentially considered to be switched off, where the station may include a CU, a DU, and/or the like.

In a design, the solution shown in FIG. 10a and FIG. 10b may be combined with the solution in the foregoing Embodiment 1. The DU may include or may manage at least one cell, and the at least one cell may be a cell providing coverage (a coverage cell) and/or a cell providing capacity (a capacity cell). One DU may manage a coverage cell, or manage a capacity cell, or manage both a capacity cell and a coverage cell. One CU may be connected to one or more DUs, and the CU may manage a cell managed by the one or more DUs. Different from the foregoing Embodiment 1, if cells of the capacity station are to be switched off in the energy saving policy, the AI device may preferentially switch off cells of a same BBU in the capacity station. It should be noted that, in the foregoing descriptions of step 1001 and step 1002, an example in which the AI device first predicts network load and network coverage, and then infers an energy saving policy based on the predicted network load and network coverage as well as determined information about a BBU to which each station belongs is used for description, and is not intended to limit this application. For example, in a design, the AI device may infer an energy saving policy based on the first data.

Step 1003: The AI device sends the inferred energy saving policy to the CU and/or the DU. Optionally, the AI device may further send predicted network load, predicted network coverage, and/or the like to the CU and/or the DU.

For example, the energy saving policy may include at least one of the following: a scenario type tag of a capacity cell of the CU and/or the DU; an energy saving operation performed in the capacity cell of the CU and/or the DU; time information of performing the energy saving operation; a corresponding operation in a coverage cell of the CU and/or the DU during execution of the energy saving operation in the capacity cell of the CU and/or the DU; time information of the corresponding operation; a condition that needs to be satisfied to execute the energy saving policy in the capacity cell of the CU and/or the DU, or the like.

Step 1004: The CU and/or the DU perform an energy saving operation based on an indication of the energy saving policy.

It should be noted that, in a process in which the CU executes the energy saving policy, if the CU and/or the DU needs to be switched off, UE accessing the CU and/or the DU may need to be migrated to another station that is not to be switched off.

Optionally, step 1005: The AI device receives second data from the CU and/or the DU.

Optionally, step 1006: The AI device determines, based on the second data, whether the energy saving policy needs to be modified.

If the AI device needs to modify the energy saving policy, the following step 1007 is performed; otherwise, the energy saving policy is not updated.

Optionally, step 1007: The AI device sends an updated energy saving policy to the CU and/or the DU. Optionally, the AI device may further send updated network load, updated network coverage, and the like to the CU and/or the DU. Optionally, the AI device may further modify, based on the second data, an AI model used for an AI inference.

Optionally, step 1008: The CU and/or the DU exits an energy saving state in advance or modifies the energy saving policy, and notifies the AI device and another station.

Step 1009: When energy saving ends, the CU and/or the DU exits the energy saving state.

In a design, the CU may manage at least one DU, and the CU may control, based on the energy saving policy sent by the AI device, the DU to perform the energy saving operation. In another design, if all DUs under the CU are in the energy saving state, the CU may also determine to enter the energy saving state, and so on.

It may be understood that, in the foregoing process in FIG. 10a and FIG. 10b, a quantity of CUs is n, and the CUs are indexed as CU1 to CUn in sequence. A quantity of DUs is m, and the DUs are indexed as DU1 to DUm in sequence. In a design, the n CUs and the m DUs may be within a specific area, or in other words, the n CUs and the m DUs are included in a specific area that requires energy saving. If energy saving is implemented in the area, stations belonging to a same BBU may be preferentially switched off, to implement BBU-level energy saving.

For the foregoing Embodiment 1 to Embodiment 4, it should be noted that:
1. The foregoing descriptions focus on differences between Embodiment 1, Embodiment 2, Embodiment 3, and Embodiment 4. For other content than the differences, reference may be made to each other.
2. Not all the steps shown in the flowcharts described in Embodiment 1 to Embodiment 4 are necessary steps, and some steps may be added or deleted based on the flowcharts according to actual requirements. For example, the foregoing steps 404 to 406 may be optionally performed.
3. In the descriptions in Embodiment 1 to Embodiment 3, an example in which a specific hardware device is used as a whole is used for description, and actions of modules in the hardware are not described. To enable the hardware device as a whole to implement related functions described in the foregoing embodiments, operations between modules in the hardware device and operations of the modules also fall within the protection scope of embodiments of this application.

For example, in a design, as an open radio access network (open radio access network, O-RAN) is proposed, functions of an access network device may be implemented by a plurality of universal standard modules. As shown in FIG. 2b, functions of a base station may be implemented by a CU module or a DU module. For example, in the foregoing Embodiment 1, taken as a whole, actions of the coverage station or the capacity station may be: The coverage station or the capacity station reports the first data to the AI device, and the coverage station or the capacity station receives the energy saving policy from the AI device.

If the coverage station or the capacity station includes a CU module and a DU module, a transmission path of the first data may be: a DU sends the first data to a CU, and the CU forwards the first data to the AI device. A transmission path of the energy saving policy may be: The CU receives an energy saving policy from the AI device, and the CU sends the energy saving policy to the DU.

4. In the descriptions of the foregoing Embodiment 1 to Embodiment 3, the following descriptions are provided: "A device outputs specific data or an energy saving policy". For example, the coverage station and the capacity station output the first data, and the AI device outputs the energy saving policy. In the descriptions of this application, that "a device outputs specific data or an energy saving policy (for ease of differentiation, the specific data or the energy saving policy may be referred to as data or energy saving policy A hereinafter)" may include: a device sends the data or the energy saving policy A to another device; a specific module in the device outputs the data or the energy saving policy A to another module in the device, and the another module sends the data or the energy saving policy A to another device; or the like.

"The device obtains data or a policy from another device". For example, the AI device obtains the first data from the coverage station or the capacity station, or the coverage station or the capacity station obtains the energy saving policy from the AI device. In the descriptions of this application, that "the device obtains data or a policy from another device" may be "the device receives data or a policy from another device", "a specific module in the device receives data or a policy from another device, and the specific module in the device forwards the received data or policy to another module in the device", or the like.

5. In descriptions of the foregoing Embodiment 1 to Embodiment 3, the description of "one piece of data or a policy includes indication information of specific information" is provided. For example, the first data or the energy saving policy may include indication information of at least one item, and the like. The following descriptions are provided for the foregoing description: The data or the policy may directly indicate corresponding information. For example, the information is directly carried in the data or the policy. Alternatively, the data or the policy may indirectly indicate corresponding information. For example, the data or the policy may carry indication information of corresponding information, and the like. For example, data A includes indication information of information X, and the data A may directly indicate the information X. For example, the data A carries the information X. Alternatively, the data A may indirectly indicate the information X. For example, the data A may carry another information of the information X, and the like.

6. For ease of understanding, in the descriptions of the foregoing Embodiment 1 to Embodiment 4, terms such as the coverage station, the capacity station, and UE are directly used. It may be understood that the coverage station is a base station set up to ensure coverage of a specific area, and may be referred to as a first network device. The capacity station is a base station set up to ensure a capacity of a specific area, and may be referred to as a second network device. The UE may be a terminal device that accesses the coverage station or the capacity station. For descriptions of the network devices and the terminal device, refer to the foregoing descriptions of FIG. 1.

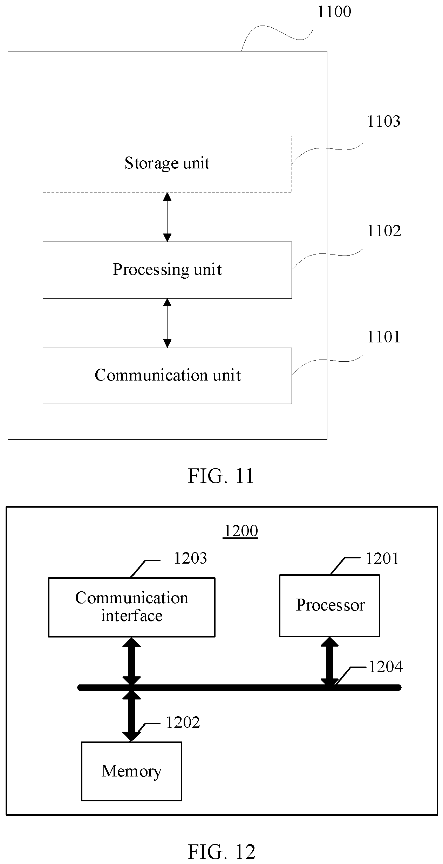

The foregoing describes in detail the methods in embodiments of this application with reference to FIG. 1 to FIG. 10b. The following describes in detail apparatuses provided in embodiments of this application with reference to FIG. 11 to FIG. 13. It should be understood that descriptions in apparatus embodiments correspond to descriptions in method embodiments. Therefore, for content that is not described in detail, refer to the descriptions in the foregoing method embodiments.

FIG. 11 is a possible block diagram of an apparatus according to an embodiment of this application. As shown in FIG. 11, an apparatus 1100 may include a communication unit 1101, configured to enable the apparatus 1100 to communicate with another device. Optionally, the communication unit 1101 is also referred to as a transceiver unit, and may include a receiving unit and/or a sending unit, which are respectively configured to perform a receiving operation and a sending operation. A processing unit 1102 is configured to enable the apparatus to perform processing. Optionally, the apparatus 1100 may further include a storage unit 1103, configured to store program code and/or data of the apparatus 1100.

In a first embodiment, the apparatus 1100 may be an AI device or a module, a chip, or a circuit in the AI device. The communication unit 1101 is configured to perform sending and receiving operations of the AI device in the foregoing method Embodiment 1. The processing unit 1102 is configured to perform a processing operation of the AI device in the foregoing method Embodiment 1.

For example, the communication unit 1101 is configured to obtain first data from a first network device and/or a second network device; the processing unit 1102 is configured to determine an energy saving policy based on the first data; and the communication unit 1101 is further configured to output the energy saving policy. The energy saving policy indicates at least one of the following: a scenario type tag of the second network device or a cell of the second network device; an energy saving operation performed by the second network device or the cell of the second network device; time information of the energy saving operation performed by the second network device or the cell of the second network device; a corresponding operation of the first network device performed during execution of the energy saving operation by the second network device or the cell of the second network device; time information of the corresponding operation performed by the first network device; or a condition that the second network device or the cell of the second network device needs to satisfy to execute the energy saving policy.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes:
at least one of the following operations performed by the first network device during execution of the energy saving operation by the second network device or the cell of the second network device: power adjustment or beam encryption.

In a possible design, the determining an energy saving policy based on the first data includes: predicting at least one of network load, network coverage, or a network service type based on the first data; and determining the energy saving policy based on at least one of the predicted network load, the predicted network coverage, or the predicted network service type.

In a possible design, the communication unit 1101 is further configured to output at least one of the predicted network load, the predicted network coverage, or the predicted network service type.

In a possible design, the obtaining first data from a first network device and a second network device includes:
outputting query information; and obtaining response information from the first network device and the second network device, where the response information is in response to the query information, and the response information indicates the first data.

In a possible design, the outputting query information includes: periodically outputting the query information; or
outputting the query information when a preset condition is satisfied.

In a possible design, the query information indicates at least one of the following: a service type predicted by the AI device supporting AI prediction, time information of the energy saving policy output by the AI device, information included in the energy saving policy, the first data that the first network device needs to provide, or the first data that the second network device needs to provide.

In a possible design, the method further includes: obtaining at least one of the following: service information of interest to the first network device and/or the second network device, time information of interest to the first network device and/or the second network device, or condition information of interest to the first network device and/or the second network device.

In a possible design, the first data indicates at least one of the following: an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

In a possible design, the communication unit 1101 is further configured to obtain second data from the first network device and/or the second network device, where the second data indicates network statuses of the first network device and the second network device during execution of the energy saving policy by the first network device and/or the second network device; the processing unit 1102 is further configured to update the energy saving policy based on the second data; and the communication unit 1101 is further configured to output an updated energy saving policy.

In a second embodiment, the apparatus 1100 may be a network device or a module, a chip, or a circuit in the network device. The communication unit 1101 is configured to perform sending and receiving operations of the coverage station in the foregoing method Embodiment 1. The processing unit 1102 is configured to perform a processing operation of the coverage station in the foregoing method Embodiment 1.

For example, the communication unit 1101 is configured to output first data; and the communication unit 1101 is further configured to obtain an energy saving policy from an artificial intelligence AI device. The energy saving policy indicates at least one of the following: a scenario type tag of a second network device or a cell of the second network device; an energy saving operation performed by the second network device or the cell of the second network device; time information of the energy saving operation performed by the second network device or the cell of the second network device; a corresponding operation of a first network device performed during execution of the energy saving operation by the second network device or the cell of the second network device; time information of the corresponding operation performed by the first network device; or a condition that the second network device or the cell of the second network device needs to satisfy to execute the energy saving policy. Optionally, the processing unit 1102 is configured to perform a corresponding energy saving operation based on an indication of the energy saving policy.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device or the cell of the second network device: power adjustment or beam encryption.

In a possible design, the communication unit 1101 is further configured to obtain at least one of predicted network load, predicted network coverage, or a predicted network service type from the AI device.

In a possible design, the communication unit 1101 is further configured to: obtain query information from the AI device; and output response information, where the response information is in response to the query information, and the response information indicates the first data.

In a possible design, the query information indicates at least one of the following: a service type predicted by the AI device supporting AI prediction, time information of the energy saving policy output by the AI device, information included in the energy saving policy, the first data that the first network device needs to provide, or the first data that the second network device needs to provide.

In a possible design, the method further includes: obtaining at least one of the following: service information of interest to the first network device and/or the second network device, time information of interest to the first network device and/or the second network device, or condition information of interest to the first network device and/or the second network device.

In a possible design, the first data indicates at least one of the following: an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

In a possible design, the communication unit 1101 is further configured to: output second data, where the second data indicates a network status of the first network device and/or the second network device during execution of the energy saving policy by the first network device and the second network device; and obtain an updated energy saving policy from the AI device, where the updated energy saving policy is determined based on the second data.

In a third embodiment, the apparatus 1100 may be a network device or a module, a chip, or a circuit in the network device. The communication unit 1101 is configured to perform sending and receiving operations of the capacity station in the foregoing method Embodiment 1. The processing unit 1102 is configured to perform a processing operation of the capacity station in the foregoing method Embodiment 1.

For example, the communication unit 1101 is configured to output first data, where the first data is used to determine an energy saving policy; and the communication unit 1101 is further configured to obtain an energy saving policy from an artificial intelligence AI device. The energy saving policy indicates at least one of the following: a scenario type tag of a second network device or a cell of the second network device; an energy saving operation performed by the second network device or the cell of the second network device; time information of the energy saving operation performed by the second network device or the cell of the second network device; a corresponding operation of a first network device performed during execution of the energy saving operation by the second network device or the cell of the second network device; time information of the corresponding operation performed by the first network device; or a condition that the second network device or the cell of the second network device needs to satisfy to perform the energy saving operation. Optionally, the processing unit 1102 is configured to perform a corresponding energy saving operation based on an indication of the energy saving policy.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following:
cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device: power adjustment or beam encryption.

In a possible design, the communication unit 1101 is further configured to obtain at least one of predicted network load, predicted network coverage, or a predicted network service type from the AI device.

In a possible design, the outputting first data includes: obtaining query information from the AI device; and outputting response information, where the response information is in response to the query information, and the response information indicates the first data.

In a possible design, the query information indicates at least one of the following: a service type predicted by the AI device supporting AI prediction, time information of the energy saving policy output by the AI device, information included in the energy saving policy, the first data that the first network device needs to provide, or the first data that the second network device needs to provide.

In a possible design, the method further includes: obtaining at least one of the following: service information of interest to the first network device and/or the second network device, time information of interest to the first network device and/or the second network device, or condition information of interest to the first network device and/or the second network device.

In a possible design, the first data indicates at least one of the following: an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

In a possible design, the communication unit 1101 is further configured to: output second data, where the second data indicates a network status of the first network device and/or the second network device during execution of the energy saving policy by the first network device and the second network device; and obtain an updated energy saving policy from the AI device, where the updated energy saving policy is determined based on the second data.

In a fourth embodiment, the apparatus 1100 may be a network device or a module, a chip, or a circuit of the network device. The communication unit 1101 is configured to perform sending and receiving operations of the coverage station in the foregoing method Embodiment 2. The processing unit 1102 is configured to perform a processing operation of the coverage station in the foregoing method Embodiment 2.

For example, the communication unit 1101 is configured to obtain first data from a second network device; the processing unit 1102 is configured to determine an energy saving policy based on the first data; and the communication unit 1101 is configured to output the energy saving policy. The energy saving policy indicates at least one of the following: a scenario type tag of the second network device or a cell of the second network device; an energy saving operation performed by the second network device or the cell of the second network device; time information of the energy saving operation performed by the second network device or the cell of the second network device; or a condition that the second network device or the cell of the second network device needs to satisfy to execute the energy saving policy.

In a possible design, the energy saving policy further indicates at least one of the following: a corresponding operation of the first network device performed during execution of the energy saving operation by the second network device or the cell of the second network device; and time information of the corresponding operation performed by the first network device.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device: power adjustment or beam encryption.

In a possible design, the determining an energy saving policy based on the first data includes: predicting at least one of network load, network coverage, or a network service type based on the first data; and determining the energy saving policy based on at least one of the predicted network load, the predicted network coverage, or the predicted network service type.

In a possible design, the communication unit 1101 is further configured to output at least one of the predicted network load, the predicted network coverage, or the predicted network service type.

In a possible design, the obtaining first data from a second network device includes: outputting query information; and obtaining response information from the second network device, where the response information is in response to the query information, and the response information indicates the first data.

In a possible design, the outputting query information includes: periodically outputting the query information; or
outputting the query information when a preset condition is satisfied.

In a possible design, the query information indicates at least one of the following: a service type predicted by the first network device supporting artificial intelligence AI prediction, time information of the energy saving policy output by the first network device, information included in the energy saving policy, or the first data that the second network device needs to provide.

In a possible design, the method further includes: obtaining at least one of the following: service information of interest to the second network device, time information of interest to the second network device, or condition information of interest to the second network device.

In a possible design, the first data indicates at least one of the following: an operating parameter of the second network device; networking information of the second network device; scenario information of the second network device; cell information of the second network device; hardware resource information of the second network device; an operator policy of the second network device; an air interface resource of the second network device; a transport network layer resource of the second network device; cell capacity information of the second network device; or slice capacity information of the second network device; or information about a terminal device served by the second network device.

In a possible design, the communication unit 1101 is configured to obtain second data from the second network device, where the second data indicates a network status of the second network device during execution of the energy saving policy by the second network device; the processing unit 1102 is configured to update the energy saving policy based on the second data; and the communication unit 1101 is further configured to output an updated energy saving policy.

In a fifth embodiment, the apparatus 1100 may be a network device or a module, a chip, or a circuit in the network device. The communication unit 1101 is configured to perform sending and receiving operations of the capacity station in the foregoing method Embodiment 2. The processing unit 1102 is configured to perform a processing operation of the capacity station in the foregoing method Embodiment 2.

For example, the communication unit 1101 is configured to output first data, where the first data is used to determine an energy saving policy; and the communication unit 1101 is further configured to obtain an energy saving policy from a first network device. The energy saving policy indicates at least one of the following: a scenario type tag of a second network device or a cell of the second network device; an energy saving operation performed by the second network device or the cell of the second network device; time information of the energy saving operation performed by the second network device or the cell of the second network device; or a condition that the second network device or the cell of the second network device needs to satisfy to execute the energy saving policy. Optionally, the processing unit 1102 is configured to perform the energy saving operation based on an indication of the energy saving policy.

In a possible design, the energy saving policy further indicates at least one of the following: a corresponding operation of the first network device performed during execution of the energy saving operation by the second network device or the cell of the second network device, or time information of the corresponding operation performed by the first network device.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device or the cell of the second network device: power adjustment or beam encryption.

In a possible design, the communication unit 1101 is further configured to obtain at least one of network load, network coverage, or a network service type that is predicted by the first network device.

In a possible design, the outputting first data includes: obtaining query information from the first network device; and outputting response information, where the response information is in response to the query information, and the response information indicates the first data.

In a possible design, the query information indicates at least one of the following: a service type predicted by the first network device supporting artificial intelligence AI prediction, time information of the energy saving policy output by the first network device, information included in the energy saving policy, or the first data that the second network device needs to provide.

In a possible design, the method further includes: obtaining at least one of the following: service information of interest to the second network device, time information of interest to the second network device, or condition information of interest to the second network device.

In a possible design, the first data indicates at least one of the following: an operating parameter of the second network device; networking information of the second network device; scenario information of the second network device; cell information of the second network device; hardware resource information of the second network device; an operator policy of the second network device; an air interface resource of the second network device; a transport network layer resource of the second network device; cell capacity information of the second network device; or slice capacity information of the second network device; or information about a terminal device served by the second network device.

In a possible design, the communication unit 1101 is further configured to output second data, where the second data indicates a network status of the second network device during execution of the energy saving policy by the second network device; and obtain an updated energy saving policy from the first network device, where the updated energy saving policy is determined based on the second data.

In the fifth embodiment, the apparatus 1100 may be a network device or a module, a chip, or a circuit in the network device. The communication unit 1101 is configured to perform sending and receiving operations of the capacity station in the foregoing method Embodiment 3. The processing unit 1102 is configured to perform a processing operation of the capacity station in the foregoing method Embodiment 3.

For example, the communication unit 1101 is configured to obtain first data from a first network device; the processing unit 1102 is configured to determine an energy saving policy based on the first data; and the communication unit 1101 is configured to output the energy saving policy. The energy saving policy indicates at least one of the following: a corresponding operation of the first network device performed during execution of an energy saving operation corresponding to the energy saving policy by a second network device or a cell of the second network device; or time information of the corresponding operation performed by the first network device.

In a possible design, the energy saving policy further indicates at least one of the following: a scenario type tag of the second network device or the cell of the second network device; the energy saving operation performed by the second network device or the cell of the second network device; time information of the energy saving operation performed by the second network device or the cell of the second network device; or a condition that the second network device or the cell of the second network device needs to satisfy to execute the energy saving policy.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device or the cell of the second network device: power adjustment or beam encryption.

In a possible design, the determining an energy saving policy based on the first data includes: predicting at least one of network load, network coverage, or a network service type based on the first data; and determining the energy saving policy based on at least one of the predicted network load, the predicted network coverage, or the predicted network service type.

In a possible design, the communication unit 1101 is further configured to output at least one of the predicted network load, the predicted network coverage, or the predicted network service type.

In a possible design, the obtaining first data from a first network device includes: outputting query information; and obtaining response information from the first network device, where the response information is in response to the query information, and the response information indicates the first data.

In a possible design, the outputting query information includes: periodically outputting the query information; or outputting the query information when a preset condition is satisfied.

In a possible design, the query information indicates at least one of the following: a service type predicted by the second network device supporting artificial intelligence AI prediction, time information of the energy saving policy output by the second network device, information included in the energy saving policy, or the first data that the first network device needs to provide.

In a possible design, the method further includes: obtaining at least one of the following: service information of interest to the first network device, time information of interest to the first network device, or condition information of interest to the first network device.

In a possible design, the first data indicates at least one of the following: an operating parameter of the first network device; networking information of the first network device; scenario information of the first network device; cell information of the first network device; hardware resource information of the first network device; an operator policy of the first network device; an air interface resource of the first network device; a transport network layer resource of the first network device; cell capacity information of the first network device; slice capacity information of the first network device; or information about a terminal device served by the first network device.

In a possible design, the communication unit 1101 is further configured to obtain second data from the first network device, where the second data indicates a network status of the first network device during execution of the energy saving policy by the first network device; the processing unit 1102 is further configured to update the energy saving policy based on the second data; and the communication unit 1101 is further configured to output an updated energy saving policy.

In a sixth embodiment, the apparatus 1100 may be a network device or a module, a chip, or a circuit in the network device. The communication unit 1101 is configured to perform sending and receiving operations of the coverage station in the foregoing method Embodiment 3. The processing unit 1102 is configured to perform a processing operation of the coverage station in the foregoing method Embodiment 3.

For example, the communication unit 1101 is configured to output first data, where the first data is used to determine an energy saving policy; and the communication unit 1101 is further configured to obtain the energy saving policy from a second network device. The energy saving policy indicates at least one of the following: a corresponding operation of a first network device performed during execution of the energy saving operation by the second network device or a cell of the second network device; or time information of the corresponding operation performed by the first network device. Optionally, the processing unit 1102 is configured to perform a corresponding energy saving operation based on an indication of the energy saving policy.

In a possible design, the energy saving policy further indicates at least one of the following: a scenario type tag of the second network device or the cell of the second network device; the energy saving operation performed by the second network device or the cell of the second network device; time information of the energy saving operation performed by the second network device or the cell of the second network device; or a condition that the second network device or the cell of the second network device needs to satisfy to execute the energy saving policy.

In a possible design, the scenario type tag of the second network device or the cell of the second network device indicates energy saving first or capacity first. The energy saving first means that the second network device or the cell of the second network device preferentially executes the energy saving policy. The capacity first means that the second network device or the cell of the second network device preferentially ensures a capacity.

In a possible design, the energy saving operation performed by the second network device or the cell of the second network device includes at least one of the following: cell switch-off, symbol switch-off, slot switch-off, subframe switch-off, port switch-off, carrier switch-off, channel switch-off, or transmit power adjustment.

In a possible design, the corresponding operation of the first network device performed during execution of the energy saving operation by the second network device or the cell of the second network device includes: at least one of the following operations performed by the first network device during execution of the energy saving operation by the second network device or the cell of the second network device: power adjustment or beam encryption.

In a possible design, the communication unit 1101 is further configured to obtain at least one of network load, network coverage, or a network service type that is predicted by the second network device.

In a possible design, the outputting first data includes: obtaining query information from the second network device; and outputting response information, where the response information is in response to the query information, and the response information indicates the first data.

In a possible design, the query information indicates at least one of the following: a service type predicted by the second network device supporting artificial intelligence AI prediction, time information of the energy saving policy output by the second network device, information included in the energy saving policy, or the first data that the first network device needs to provide.

In a possible design, the method further includes: obtaining at least one of the following: service information of interest to the first network device, time information of interest to the first network device, or condition information of interest to the first network device.

In a possible design, the first data indicates at least one of the following: an operating parameter of the first network device; networking information of the first network device; scenario information of the first network device; cell information of the first network device; hardware resource information of the first network device; an operator policy of the first network device; an air interface resource of the first network device; a transport network layer resource of the first network device; cell capacity information of the first network device; slice capacity information of the first network device; or information about a terminal device served by the first network device.

In a possible design, the communication unit 1101 is further configured to: output second data, where the second data indicates a network status of the first network device during execution of the energy saving policy by the first network device; and obtain an updated energy saving policy from the second network device, where the updated energy saving policy is determined based on the second data.

It should be further understood that division of units in the apparatus is merely division of logical functions. During actual implementation, all or some of the units may be integrated into one physical entity or may be physically separated. In addition, all units in the apparatus may be implemented in a form of software invoked by a processing element, or may be implemented in a form of hardware; or some units may be implemented in a form of software invoked by a processing element, and some units are implemented in a form of hardware. For example, each unit may be a separately disposed processing element, or may be integrated into a specific chip of the apparatus. Alternatively, each unit may be implemented by being stored in a memory in a form of a program, and a specific processing element of the apparatus invokes the program and executes a function of the unit. Alternatively, all or some of these units may be integrated together, or may be implemented independently. The processing element herein may be a processor, or an integrated circuit capable of processing a signal. In an implementation process, operations in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the unit in the apparatus may be implemented in the form of a program invoked by a processing element, the processing element may be a processor, for example, a general-purpose central processing unit (central processing unit, CPU), or another processor that can invoke a program. For another example, these units may be integrated together and implemented in a form of a system-on-a-chip (system-on-a-chip, SOC).

The foregoing receiving unit is an interface circuit of the apparatus, and is configured to receive a signal from another apparatus. For example, when the apparatus is implemented in the form of a chip, the receiving unit is an interface circuit that is of the chip and that is configured to receive a signal from another chip or another apparatus. The foregoing sending unit is an interface circuit of the apparatus, and is configured to send a signal to another apparatus. For example, when the apparatus is implemented in the form of a chip, the sending unit is an interface circuit that is of the chip and that is configured to send a signal to another chip or another apparatus.

FIG. 12 is a schematic diagram of a structure of an AI device according to an embodiment of this application. The AI device may be a remote intelligent communication apparatus, a wireless intelligent controller, an AI node, or the like. The AI device includes at least one processor 1201. The apparatus may further include at least one memory 1202, configured to store program instructions and/or data. The memory 1202 is coupled to a processor 1201. The coupling in embodiments of this application indicates that apparatuses, units, or modules may be spaced from and coupled to each other or communicatively connected to each other. The coupling may be in an electrical form, a mechanical form, or another form, and is used for information exchange between the apparatuses, the units, or the modules. The processor 1201 and the memory 1202 may perform an operation in collaboration. The processor 1201 may execute program instructions stored in the memory 1202. At least one of the at least one memory 1202 may be included in the processor 1201.

The apparatus 1200 may further include a communication interface 1203, configured to communicate with another device by using a transmission medium, so that the communication apparatus 1200 may communicate with another device.

It should be understood that a connection medium between the processor 1201, the memory 1202, and the communication interface 1203 is not limited in embodiments of this application. In embodiments of this application, in FIG. 12, the memory 1202, the processor 1201, and the communication interface 1203 are connected by using a communication bus 1204; the bus is represented by a bold line in FIG. 12; and a connection between other components is merely an example for description, and is not limited. The bus may include an address bus, a data bus, a control bus, and the like. For ease of representation, in FIG. 12, only one bold line is used for representation, but it does not mean that there is only one bus, only one type of bus, or the like.

The AI device shown in FIG. 12 can implement processes related to the AI device in the foregoing method embodiments. Operations and/or functions of the modules in the AI device shown in FIG. 12 are respectively used to implement corresponding procedures in the foregoing method embodiments. For details, refer to descriptions in the foregoing method embodiments. To avoid repetition, detailed descriptions are omitted here.

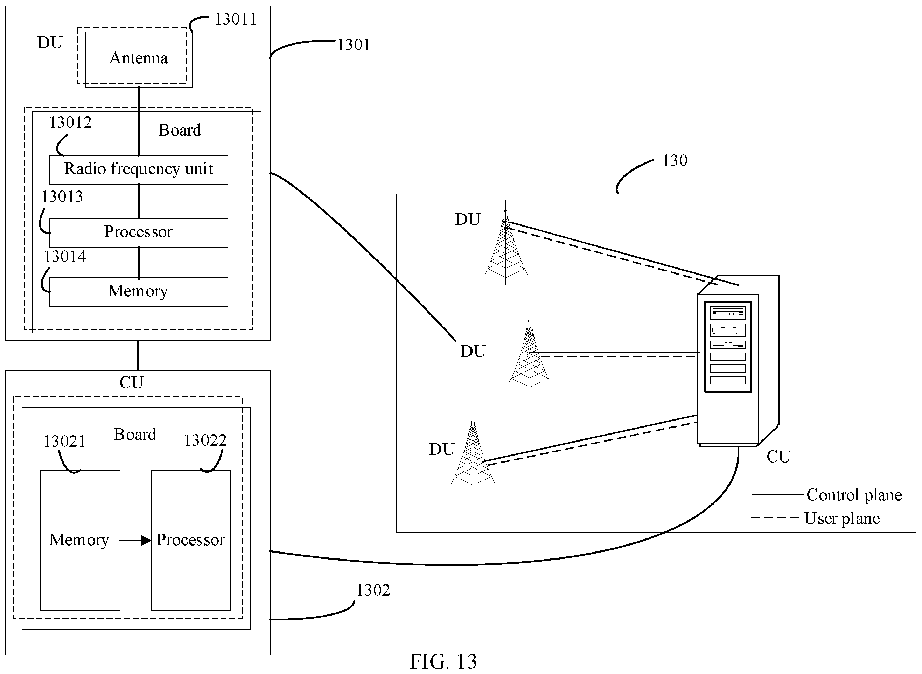

FIG. 13 is a schematic diagram of a structure of a network device according to an embodiment of this application. The network device may be an access network device (for example, a coverage station or a capacity station). An access network device 130 may include one or more DUs 1301 and one or more CUs 1302. The DU 1301 may include at least one antenna 13011, at least one radio frequency unit 13012, at least one processor 13013, and at least one memory 13014. The DU 1301 is mainly configured to receive and send radio frequency signals, perform conversion of a radio frequency signal and a baseband signal, and perform baseband processing. The CU 1302 may include at least one processor 13022 and at least one memory 13021.

The CU 1302 is mainly configured to perform baseband processing, control an access network device, and the like. The DU 1301 and the CU 1302 may be physically disposed together, or may be physically separated, that is, a distributed base station. The CU 1302 is a control center of the access network device, may also be referred to as a processing unit, and is mainly configured to complete a baseband processing function. For example, the CU 1302 may be configured to control the access network device to perform an operation procedure related to the access network device in the foregoing method embodiments.

In addition, optionally, the access network device 130 may include one or more radio frequency units, one or more DUs, and one or more CUs. The DU may include at least one processor 13013 and at least one memory 13014, the radio frequency unit may include at least one antenna 13011 and at least one radio frequency unit 13012, and the CU may include at least one processor 13022 and at least one memory 13021.

In an example, the CU 1302 may include one or more boards, and a plurality of boards may jointly support a radio access network (for example, a 5G network) with a single access indication, or may separately support radio access networks (for example, an LTE network, a 5G network, or another network) of different access standards. The memory 13021 and the processor 13022 may serve one or more boards. In other words, a memory and a processor may be separately disposed on each board. Alternatively, a plurality of boards may share a same memory and a same processor. In addition, a necessary circuit may be further provided on each board. The DU 1301 may include one or more boards. A plurality of boards may jointly support a radio access network (for example, a 5G network) with a single access indication, or may separately support radio access networks (for example, an LTE network, a 5G network, or another network) of different access standards. The memory 13014 and the processor 13013 may serve one or more boards. In other words, a memory and a processor may be separately disposed on each board. Alternatively, a plurality of boards may share a same memory and a same processor. In addition, a necessary circuit may be further provided on each board.

The access network device shown in FIG. 13 can implement processes related to the coverage station and the capacity station in the foregoing method embodiments. Operations and/or functions of the modules in the access network device shown in FIG. 13 are respectively used to implement corresponding procedures in the foregoing method embodiments. For details, refer to descriptions in the foregoing method embodiments. To avoid repetition, detailed descriptions are omitted here.

The terms "system" and "network" in embodiments of this application may be used interchangeably. "At least one" means one or more, and "a plurality of" means two or more. "And/Or" describes an association relationship between associated objects, and indicates that three relationships may exist. For example, A and/or B may indicate the following cases: Only A exists, both A and B exist, and only B exists, where A and B may be in a singular form or a plural form. The character "/" generally indicates an "or" relationship between the associated objects. "At least one of the following items (pieces)" or similar expressions refer to any combination of these items, including any combination of singular items (pieces) or plural items (pieces). For example, "at least one of A, B, or C" includes A, B, C, AB, AC, BC, or ABC. Unless otherwise specified, ordinal numerals such as "first" and "second" mentioned in embodiments of this application are used to distinguish a plurality of objects, and are not used to limit a sequence, a time sequence, priorities, importance, or the like of the plurality of objects.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more procedures in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of protection defined by the following claims and their equivalent technologies.

## Claims

1. An energy saving method, comprising:
obtaining first data from a first network device and/or a second network device;
determining an energy saving policy based on the first data; and
outputting the energy saving policy, wherein the energy saving policy indicates at least one of the following: a scenario type tag of the second network device or a cell of the second network device; an energy saving operation performed by the second network device or the cell of the second network device; time information of the energy saving operation performed by the second network device or the cell of the second network device; a corresponding operation of the first network device performed during execution of the energy saving operation by the second network device or the cell of the second network device; time information of the corresponding operation performed by the first network device; or a condition that the second network device or the cell of the second network device needs to satisfy to execute the energy saving policy.

2. The method according to claim 1, wherein the scenario type tag of the second network device or the cell of the second network device indicates energy saving first or capacity first; the energy saving first means that the second network device or the cell of the second network device preferentially executes the energy saving policy; and the capacity first means that the second network device or the cell of the second network device preferentially ensures a capacity.

3. The method according to claim 1 or 2, wherein the energy saving operation performed by the second network device or the cell of the second network device comprises at least one of the following:
cell switch-off, symbol switch-off, slot switch-off, subframe switch-off, port switch-off, carrier switch-off, channel switch-off, or transmit power adjustment.

4. The method according to any one of claims 1 to 3, wherein the corresponding operation of the first network device performed during execution of the energy saving operation by the second network device or the cell of the second network device comprises:
performing, by the first network device, at least one of the following operations during execution of the energy saving operation by the second network device or the cell of the second network device: power adjustment or beam encryption.

5. The method according to any one of claims 1 to 4, wherein the determining an energy saving policy based on the first data comprises:
predicting at least one of network load, network coverage, or a network service type based on the first data; and
determining the energy saving policy based on at least one of the predicted network load, the predicted network coverage, or the predicted network service type.

6. The method according to claim 5, further comprising:
outputting at least one of the predicted network load, the predicted network coverage, or the predicted network service type.

7. The method according to any one of claims 1 to 6, wherein the obtaining first data from a first network device and/or a second network device comprises:
outputting query information; and
obtaining response information from the first network device and/or the second network device, wherein the response information is in response to the query information, and the response information indicates the first data.

8. The method according to claim 7, wherein the outputting query information comprises:
periodically outputting the query information; or
outputting the query information when a preset condition is satisfied.

9. The method according to claim 7 or 8, wherein the query information indicates at least one of the following:
a service type predicted by an AI device supporting artificial intelligence AI prediction; time information of the energy saving policy output by the AI device; information comprised in the energy saving policy; the first data that the first network device needs to provide; or the first data that the second network device needs to provide.

10. The method according to any one of claims 1 to 9, wherein the method further comprises: obtaining at least one of the following from the first network device and/or the second network device:
service information of interest to the first network device and/or the second network device, time information of interest to the first network device and/or the second network device, or condition information of interest to the first network device and/or the second network device.

11. The method according to any one of claims 1 to 10, wherein the first data indicates at least one of the following:
an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

12. The method according to any one of claims 1 to 11, further comprising:
obtaining second data from the first network device and/or the second network device, wherein the second data indicates a network status of the first network device and/or the second network device during execution of the energy saving policy by the first network device and the second network device;
updating the energy saving policy based on the second data; and
outputting the updated energy saving policy.

13. An energy saving method, comprising:
outputting first data; and
obtaining an energy saving policy from an artificial intelligence AI device, wherein the energy saving policy indicates at least one of the following: a scenario type tag of a second network device or a cell of the second network device; an energy saving operation performed by the second network device or the cell of the second network device; time information of the energy saving operation performed by the second network device or the cell of the second network device; a corresponding operation of a first network device performed during execution of the energy saving operation by the second network device or the cell of the second network device; time information of the corresponding operation performed by the first network device; or a condition that the second network device or the cell of the second network device needs to satisfy to execute the energy saving policy.

14. The method according to claim 13, wherein the outputting first data comprises:
obtaining query information from the AI device; and
outputting response information, wherein the response information is in response to the query information, and the response information indicates the first data.

15. The method according to claim 14, wherein the query information indicates at least one of the following:
a service type predicted by the AI device supporting AI prediction, time information of the energy saving policy output by the AI device, information comprised in the energy saving policy, the first data that the first network device needs to provide, or the first data that the second network device needs to provide.

16. The method according to any one of claims 13 to 15, wherein the method further comprises outputting at least one of the following:
service information of interest to the first network device and/or the second network device, time information of interest to the first network device and/or the second network device, or condition information of interest to the first network device and/or the second network device.

17. The method according to any one of claims 13 to 16, wherein the first data indicates at least one of the following:
an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

18. An energy saving method, comprising:
outputting first data; and
obtaining an energy saving policy from an artificial intelligence AI device, wherein the energy saving policy indicates at least one of the following: a scenario type tag of a second network device or a cell of the second network device; an energy saving operation performed by the second network device or the cell of the second network device; time information of the energy saving operation performed by the second network device or the cell of the second network device; a corresponding operation of a first network device performed during execution of the energy saving operation by the second network device or the cell of the second network device; time information of the corresponding operation performed by the first network device; or a condition that the second network device or the cell of the second network device needs to satisfy to perform the energy saving operation.

19. The method according to claim 18, wherein the outputting first data comprises:
obtaining query information from the AI device; and
outputting response information, wherein the response information is in response to the query information, and the response information indicates the first data.

20. The method according to claim 19, wherein the query information indicates at least one of the following:
a service type predicted by the AI device supporting AI prediction, time information of the energy saving policy output by the AI device, information comprised in the energy saving policy, the first data that the first network device needs to provide, or the first data that the second network device needs to provide.

21. The method according to any one of claims 18 to 20, wherein the method further comprises outputting at least one of the following:
service information of interest to the first network device and/or the second network device, time information of interest to the first network device and/or the second network device, or condition information of interest to the first network device and/or the second network device.

22. The method according to any one of claims 18 to 21, wherein the first data indicates at least one of the following:
an operating parameter of the first network device and/or the second network device; networking information of the first network device and/or the second network device; scenario information of the first network device and/or the second network device; cell information of the first network device and/or the second network device; hardware resource information of the first network device and/or the second network device; an operator policy of the first network device and/or the second network device; and an air interface resource of the first network device and/or the second network device; a transport network layer resource of the first network device and/or the second network device; cell capacity information of the first network device and/or the second network device; slice capacity information of the first network device and/or the second network device; or information about a terminal device served by the first network device and/or the second network device.

23. An energy saving method, comprising:
obtaining first data from a second network device;
determining an energy saving policy based on the first data; and
outputting the energy saving policy, wherein the energy saving policy indicates at least one of the following: a scenario type tag of the second network device or a cell of the second network device; an energy saving operation performed by the second network device or the cell of the second network device; time information of the energy saving operation performed by the second network device or the cell of the second network device; or a condition that the second network device or the cell of the second network device needs to satisfy to execute the energy saving policy.

24. An energy saving method, comprising:
outputting first data; and
obtaining an energy saving policy from a first network device, wherein the energy saving policy indicates at least one of the following: a scenario type tag of a second network device or a cell of the second network device; an energy saving operation performed by the second network device or the cell of the second network device; time information of the energy saving operation performed by the second network device or the cell of the second network device; or a condition that the second network device or the cell of the second network device needs to satisfy to execute the energy saving policy.

25. An energy saving method, comprising:
obtaining first data from a first network device;
determining an energy saving policy based on the first data; and
outputting the energy saving policy, wherein the energy saving policy indicates at least one of the following: a corresponding operation of the first network device performed during execution of an energy saving operation corresponding to the energy saving policy by a second network device or a cell of the second network device; or time information of the corresponding operation performed by the first network device.

26. An energy saving method, comprising:
outputting first data; and
obtaining an energy saving policy from a second network device, wherein the energy saving policy indicates at least one of the following: a corresponding operation of a first network device performed during execution of an energy saving operation by the second network device or a cell of the second network device; or time information of the corresponding operation performed by the first network device.

27. An apparatus, configured to implement the method according to any one of claims 1 to 12.

28. An apparatus, comprising a processor and a memory, wherein the processor is coupled to the memory, and the processor is configured to implement the method according to any one of claims 1 to 12.

29. An apparatus, configured to implement the method according to any one of claims 13 to 17.

30. An apparatus, comprising a processor and a memory, wherein the processor is coupled to the memory, and the processor is configured to implement the method according to any one of claims 13 to 17.

31. An apparatus, configured to implement the method according to any one of claims 18 to 22.

32. An apparatus, comprising a processor and a memory, wherein the processor is coupled to the memory, and the processor is configured to implement the method according to any one of claims 18 to 22.

33. An apparatus, configured to implement the method according to claim 23.

34. An apparatus, comprising a processor and a memory, wherein the processor is coupled to the memory, and the processor is configured to implement the method according to claim 23.

35. An apparatus, configured to implement the method according to claim 24.

36. An apparatus, comprising a processor and a memory, wherein the processor is coupled to the memory, and the processor is configured to implement the method according to claim 24.

37. An apparatus, configured to implement the method according to claim 25.

38. An apparatus, comprising a processor and a memory, wherein the processor is coupled to the memory, and the processor is configured to implement the method according to claim 25.

39. An apparatus, configured to implement the method according to claim 26.

40. An apparatus, comprising a processor and a memory, wherein the processor is coupled to the memory, and the processor is configured to implement the method according to claim 26.

41. A communication system, comprising:
the apparatus according to claim 27 or 28, the apparatus according to claim 29 or 30, and the apparatus according to claim 31 or 32; or
the apparatus according to claim 33 or 34 and the apparatus according to claim 35 or 36; or
the apparatus according to claim 37 or 38 and the apparatus according to claim 39 or 40.

42. A computer-readable storage medium, wherein the computer-readable storage medium stores instructions, and when the instructions are run on a computer, the computer is enabled to perform the method according to any one of claims 1 to 26.

43. A computer program product, comprising instructions, wherein when the instructions are run on a computer, the computer is enabled to perform the method according to any one of claims 1 to 26.
